# EUROPEAN PATENT APPLICATION

(11) **EP 3 116 175 A1**
(43) Date of publication of application: **11.01.2017**
(21) Application number: 15758990.4
(22) Date of filing: 03.03.2015
(51) Int. Cl.: H04L 12/70, H04L 12/723, G06F 9/46

(54) **SERVER, CONTROL DEVICE, MANAGEMENT DEVICE, COMMUNICATION SYSTEM, COMMUNICATION METHOD, CONTROL METHOD, MANAGEMENT METHOD, AND PROGRAM**

(30) Priority: 04.03.2014 JP 2014041380
(71) Applicant: NEC Corporation, Tokyo 108-8001 (JP)
(72) Inventor: ITOH, Nobuhiko, Tokyo 108-8001 (JP); AKIYOSHI, Ippei, Tokyo 108-8001 (JP)
(74) Representative: Reeve, Nicholas Edward
(86) International application number: PCT/JP2015/001107
(87) International publication number: WO 2015/133124

(57) **Abstract**

A technique making it possible to perform flexible virtual machine control is provided. A server according to the present invention is characterized by including: a first means capable of operating a plurality of network functions executed by a network node on a plurality of virtual machines corresponding respectively to the network functions; and a second means capable of forwarding a received signal to a virtual machine that operates a network function corresponding to this received signal.

## Description

### [Technical Field]

The present invention is based upon and claims the benefit of priority from Japanese Patent Application No. 2014-041380, filed on March 4, 2014, the disclosure of which is incorporated herein in its entirety by reference.

The present invention relates to virtual machine control, and more particularly to virtual machine control in a communication system.

### [Background Art]

In communication systems, to perform signal processing related to a communication service, a dedicated appliance or appliances corresponding to this signal processing are used. Since dedicated appliances are needed to build a communication system, a network operator is forced to introduce a new dedicated appliance or appliances when it newly launches a communication service. To introduce dedicated appliances, the network operator pays a lot of costs such as purchased expenses, installation spaces, and the like for the dedicated appliances.

In light of such circumstances, studies have been made in recent years to apply to communication systems a technique for using software to virtually execute signal processing performed by dedicated appliances.

In a communication system providing communication services to mobile telephones and the like, a communication terminal such as a mobile telephone communicates with a base station and thereby can access the Internet or the like via a core network. With virtualization technology as mentioned above, it is considered to use software to virtually execute the functions of dedicated appliances in a core network.

PTL 1 discloses an example of virtualization techniques. In PTL 1, a virtualization apparatus constructs a virtual appliance on a virtual machine, for each of dedicated appliances such as a load balancer and a web server.

### [Citation List]

### [Patent Literature]

[PTL 1]
Japanese Patent Application Unexamined Publication No. 2011-34403

### [Summary]

### [Technical Problem]

In the virtualization technique according to PTL 1, for example, when a virtual machine is installed additionally, the virtualization apparatus needs to install a virtual machine for each appliance. That is, since installation is performed by appliance basis, for example, it is difficult to install an additional virtual machine corresponding to part of the functions of a dedicated appliance, and it is impossible to achieve flexible virtual machine control.

Accordingly, an object of the present invention is to provide a technique that makes it possible to perform flexible virtual machine control.

### [Solution to Problem]

According to the present invention, a server is provided that is characterized by including: a first means capable of operating a plurality of network functions executed by a network node on a plurality of virtual machines corresponding respectively to the network functions; and a second means capable of forwarding a received signal to a virtual machine that operates a network function corresponding to this received signal.

Moreover, according to the present invention, a control apparatus is provided that is characterized by including: an interface capable of communicating with a server that operates network functions executed by a network node on virtual machines; and a virtual machine control means capable of instructing the server, via the interface, to operate a plurality of network functions on a plurality of virtual machines corresponding respectively to the network functions.

Moreover, according to the present invention, a management apparatus is provided that is characterized by including: an interface capable of communicating with a control apparatus that controls a server that operates network functions executed by a network node on virtual machines; and a virtual machine management means capable of notifying the control apparatus, via the interface, of a policy for operating a plurality of network functions on a plurality of the virtual machines corresponding respectively to the network functions.

Moreover, according to the present invention, a communication system is provided that is characterized by including: a first means capable of operating a plurality of network functions executed by a network node on a plurality of virtual machines corresponding respectively to the network functions; and a second means capable of forwarding a received signal to a virtual machine that operates a network function corresponding to this received signal.

Moreover, according to the present invention, a communication method is provided that is characterized by including: operating a plurality of network functions executed by a network node on a plurality of virtual machines corresponding respectively to the network functions, respectively; and forwarding a received signal to a virtual machine that operates a network function corresponding to this received signal.

Moreover, according to the present invention, a control method is provided that is characterized by including: communicating with a server that operates network functions executed by a network node on virtual machines; and instructing the server, via the interface, to operate a plurality of network functions on a plurality of the virtual machines corresponding respectively to the network functions.

Moreover, according to the present invention, a management method is provided that is characterized by including: communicating with a control apparatus that controls a server that operates network functions executed by a network node on virtual machines; and notifying the control apparatus, via the interface, of a policy for operating a plurality of network functions on a plurality of the virtual machines corresponding respectively to the network functions.

Further, according to the present invention, a program is provided that is characterized by causing a computer to execute: processing for communicating with a server that operates network functions executed by a network node on virtual machines; and processing for instructing the server, via the interface, to operate a plurality of network functions on a plurality of the virtual machines corresponding respectively to the network functions.

### [Advantageous Effects of Invention]

According to the present invention, a technique that makes it possible to perform flexible virtual machine control can be provided.

### [Brief Description of Drawings]

[Fig. 1]

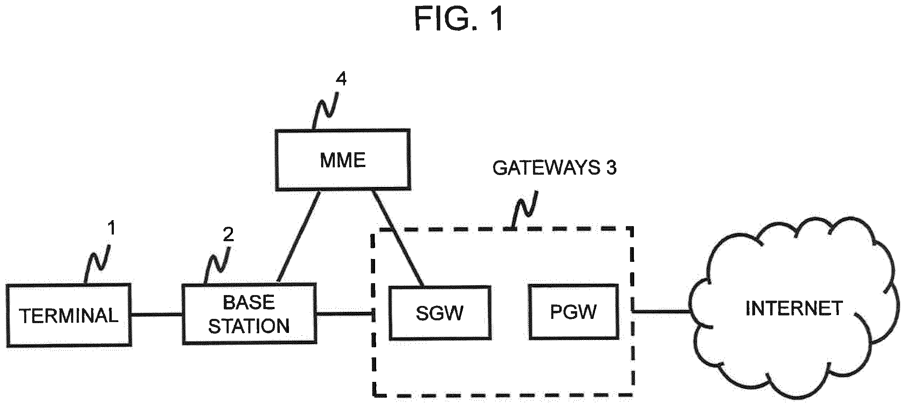

   Fig. 1 is a system architecture diagram showing an example of a communication system according to a first exemplary embodiment of the present invention.
[Fig. 2]

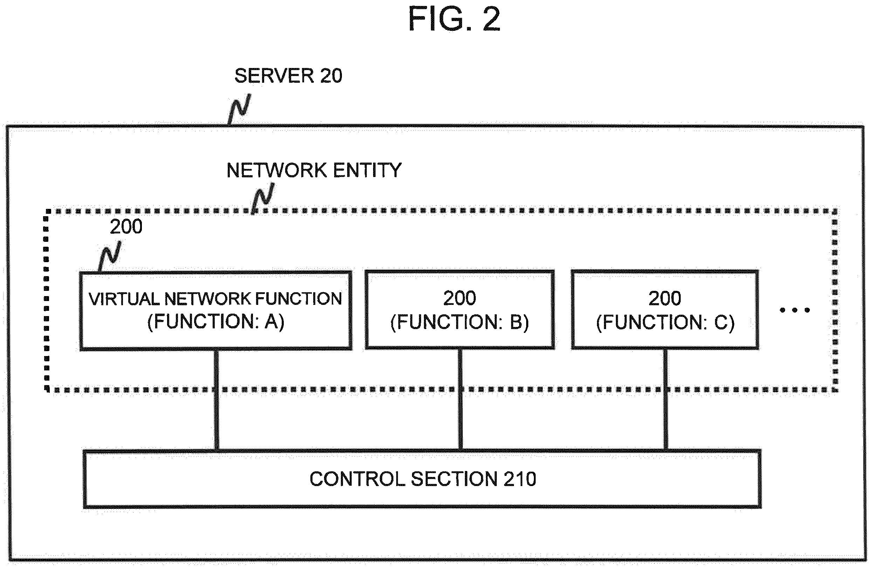

   Fig. 2 is a block diagram schematically showing an example of the functional configuration of a server according to the first exemplary embodiment.
[Fig. 3]

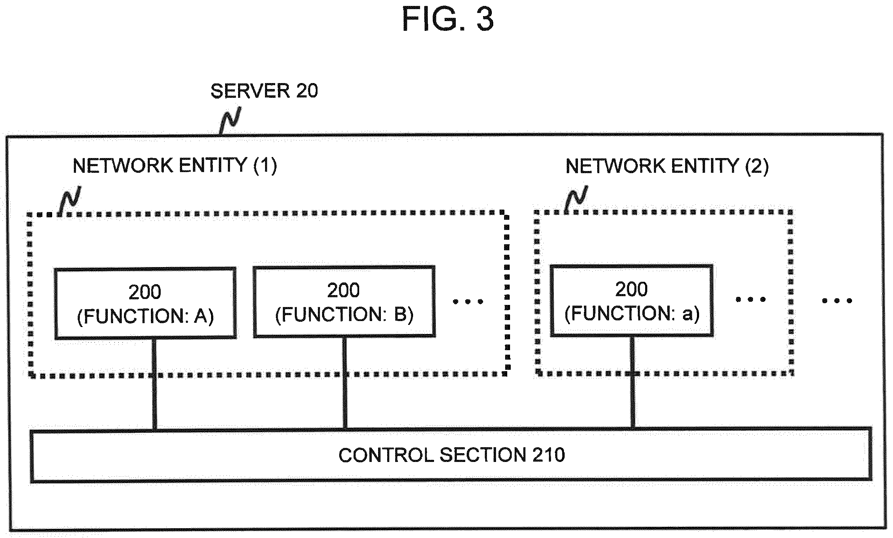

   Fig. 3 is a block diagram showing another example of the functional configuration of the server according to the first exemplary embodiment.
[Fig. 4]

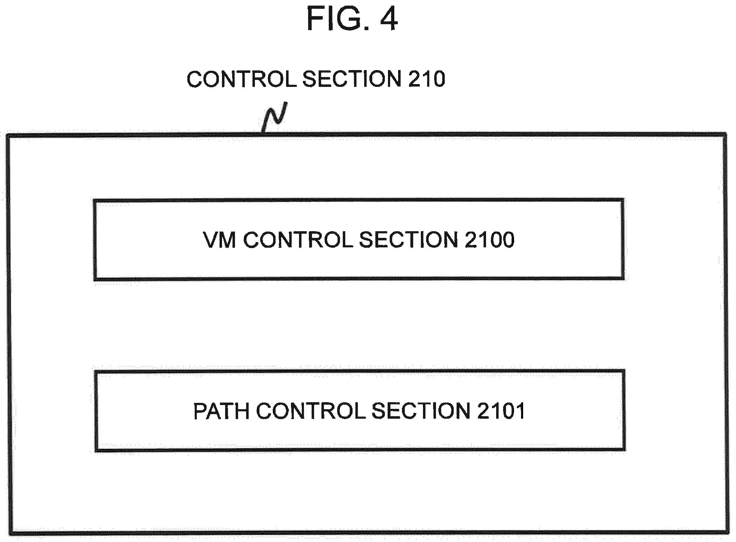

   Fig. 4 is a schematic block diagram showing an example of the configuration of a control section of the server according to the first exemplary embodiment.
[Fig. 5]

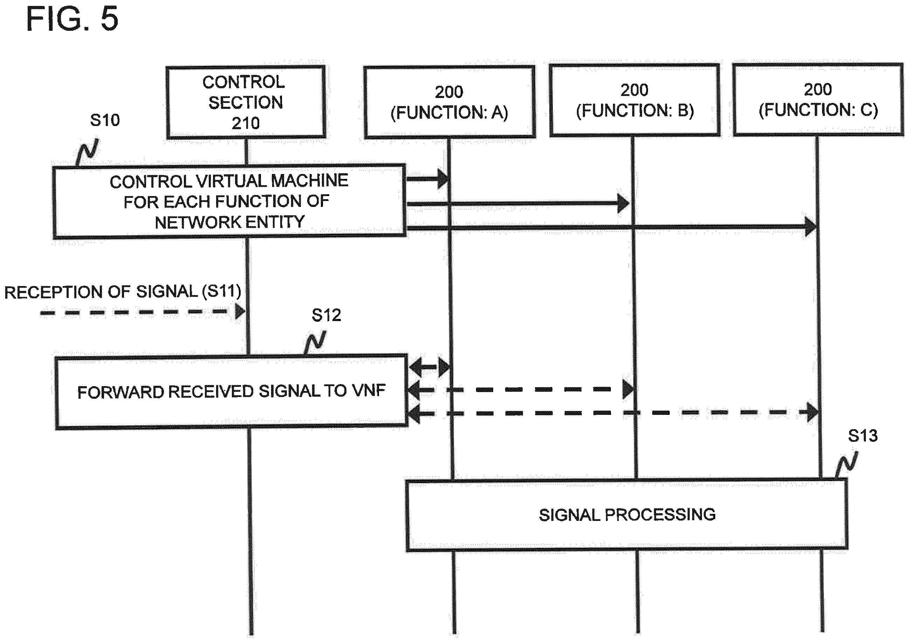

   Fig. 5 is a sequence chart for describing operation of the server according to the first exemplary embodiment.
[Fig. 6]

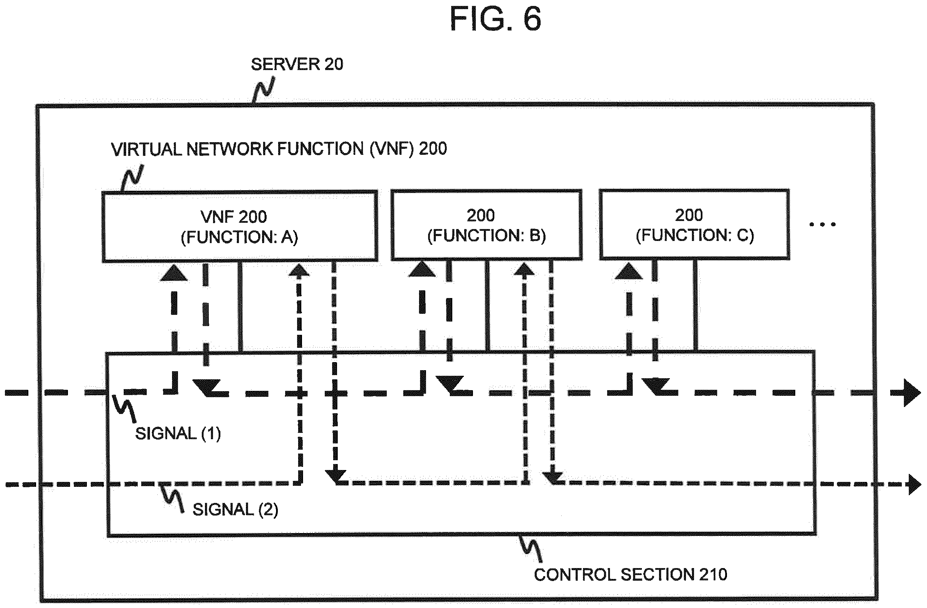

   Fig. 6 is a schematic block diagram showing an example of the functional configuration of a server according to a second exemplary embodiment of the present invention.
[Fig. 7]

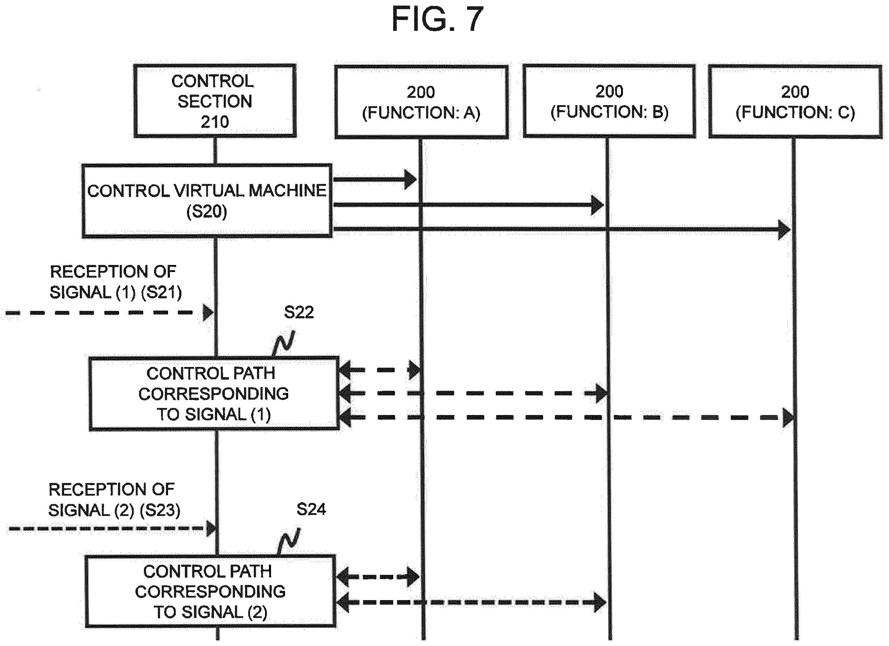

   Fig. 7 is a sequence chart for describing operation of the server according to the second exemplary embodiment.
[Fig. 8]

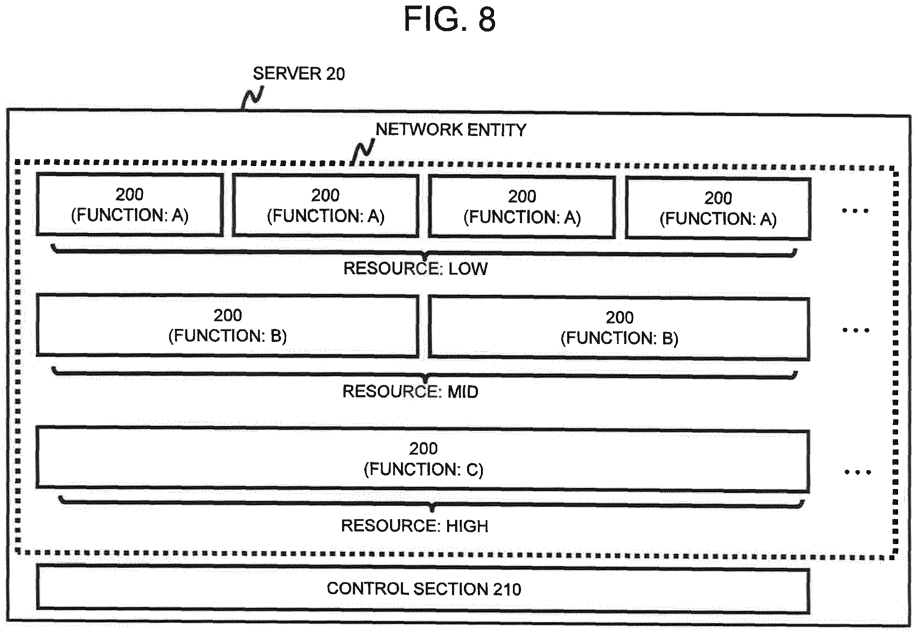

   Fig. 8 is a block diagram showing a first example of the functional configuration of a server according to a third exemplary embodiment of the present invention.
[Fig. 9]

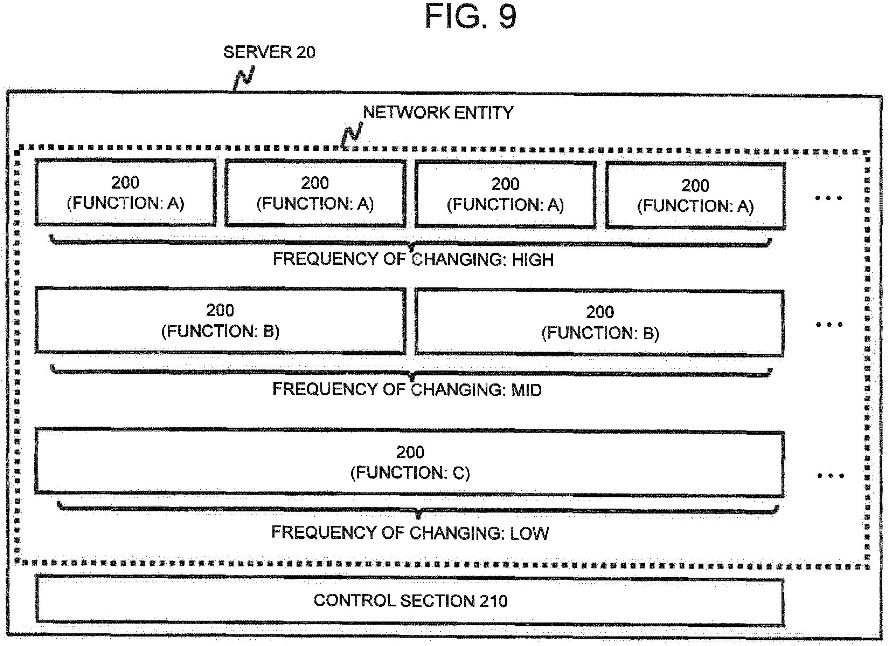

   Fig. 9 is a block diagram showing a second example of the functional configuration of the server according to the third exemplary embodiment.
[Fig. 10]

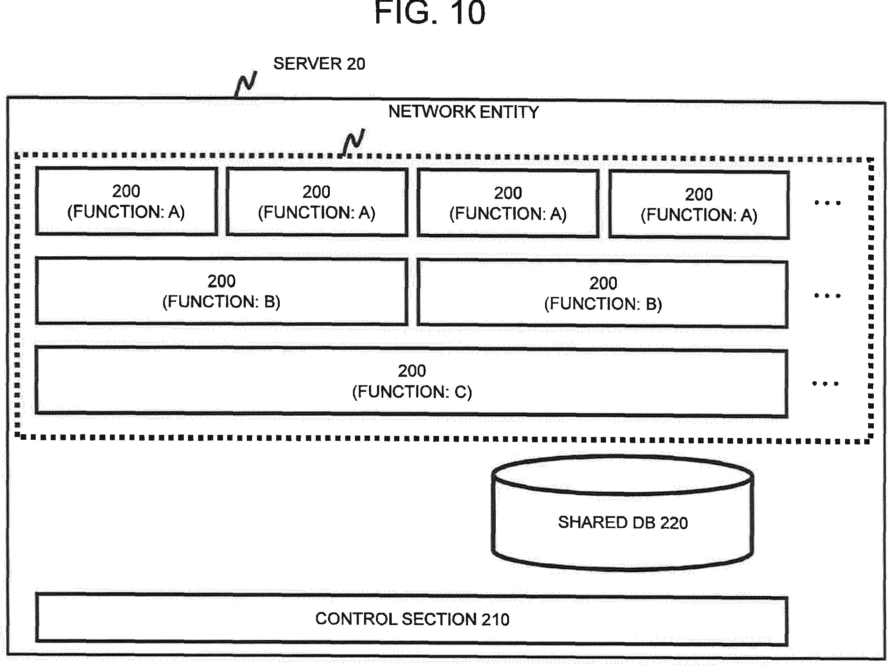

   Fig. 10 is a block diagram showing a third example of the functional configuration of the server according to the third exemplary embodiment.
[Fig. 11]

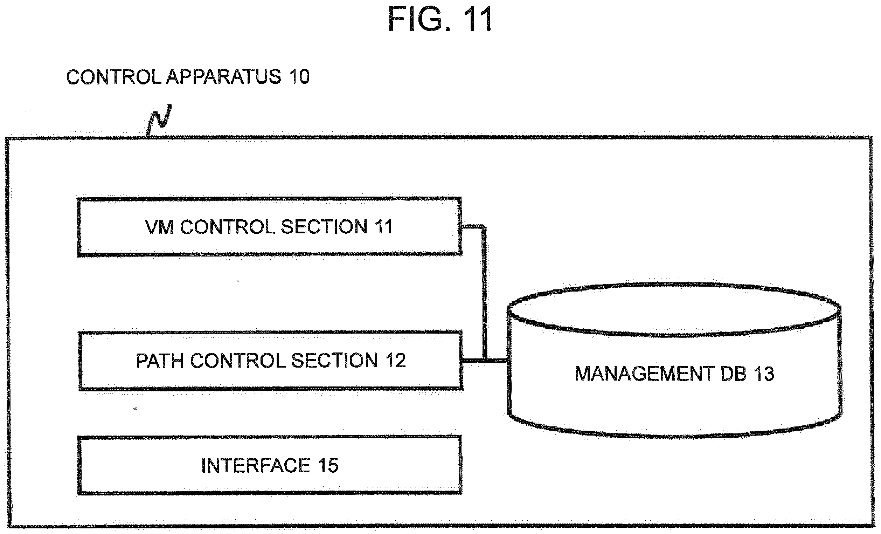

   Fig. 11 is a block diagram showing an example of the functional configuration of a control apparatus according to a fourth exemplary embodiment of the present invention.
[Fig. 12]

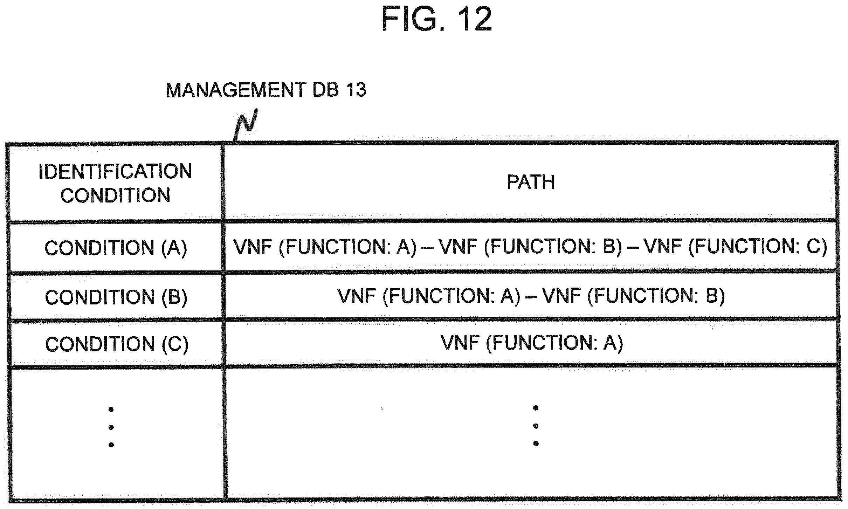

   Fig. 12 is a data structure diagram schematically showing a first structural example of information retained by a management DB in the fourth exemplary embodiment.
[Fig. 13]

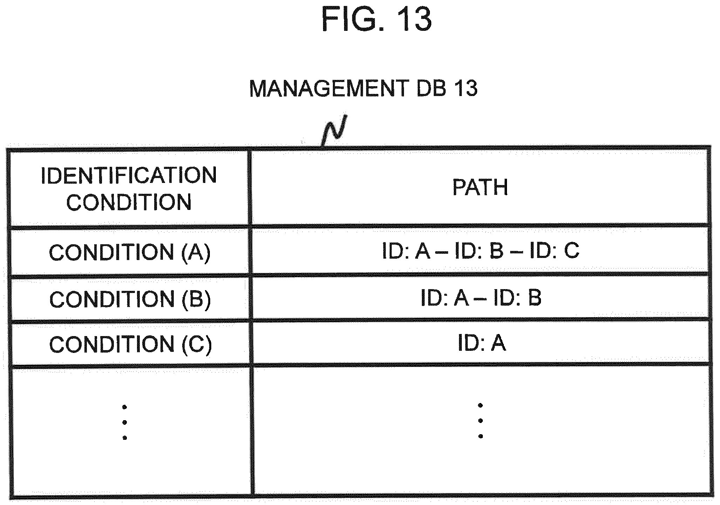

   Fig. 13 is a data structure diagram schematically showing a second structural example of the information retained by the management DB in the fourth exemplary embodiment.
[Fig. 14]

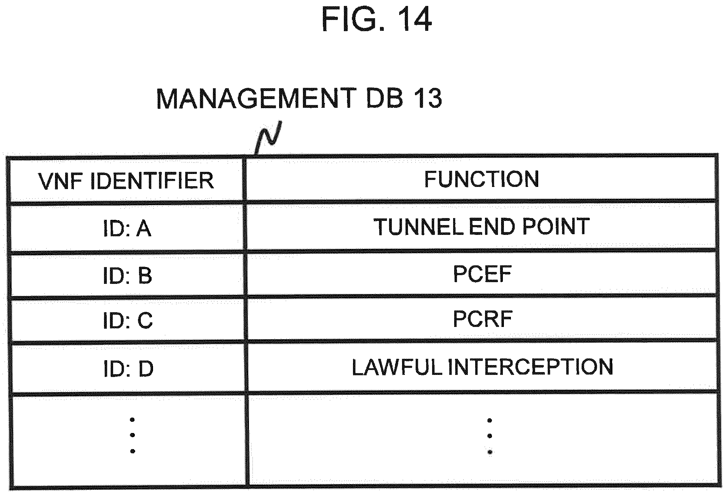

   Fig. 14 is a data structure diagram schematically showing a third structural example of the information retained by the management DB in the fourth exemplary embodiment.
[Fig. 15]

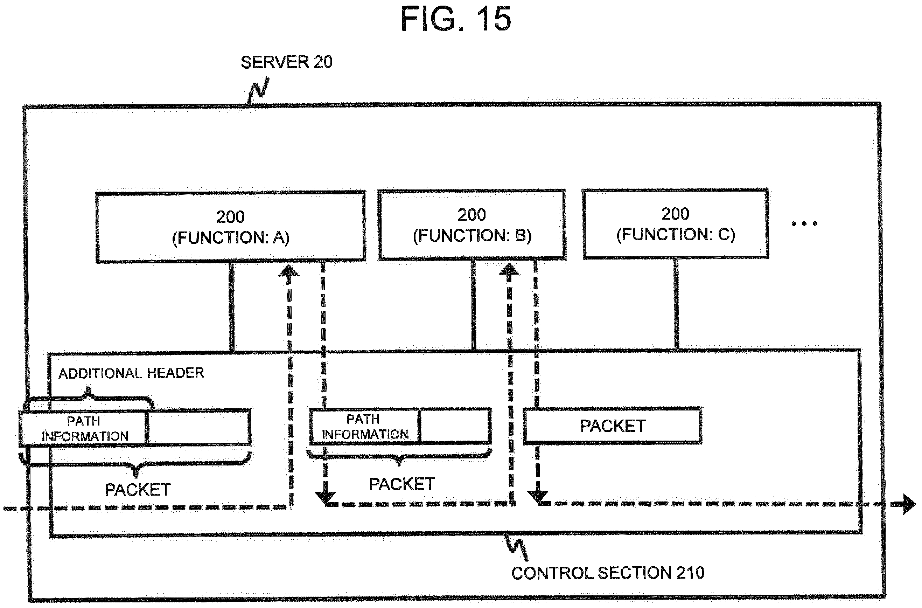

   Fig. 15 is a block diagram showing a first example of the functional configuration of a server according to a fifth exemplary embodiment of the present invention.
[Fig. 16]

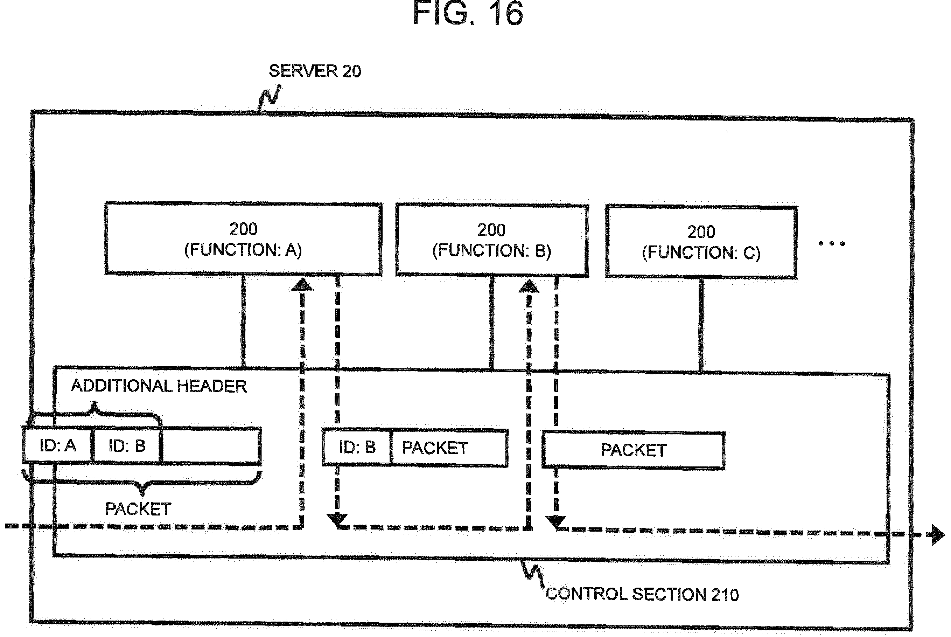

   Fig. 16 is a block diagram showing a second example of the functional configuration of the server according to the fifth exemplary embodiment.
[Fig. 17]

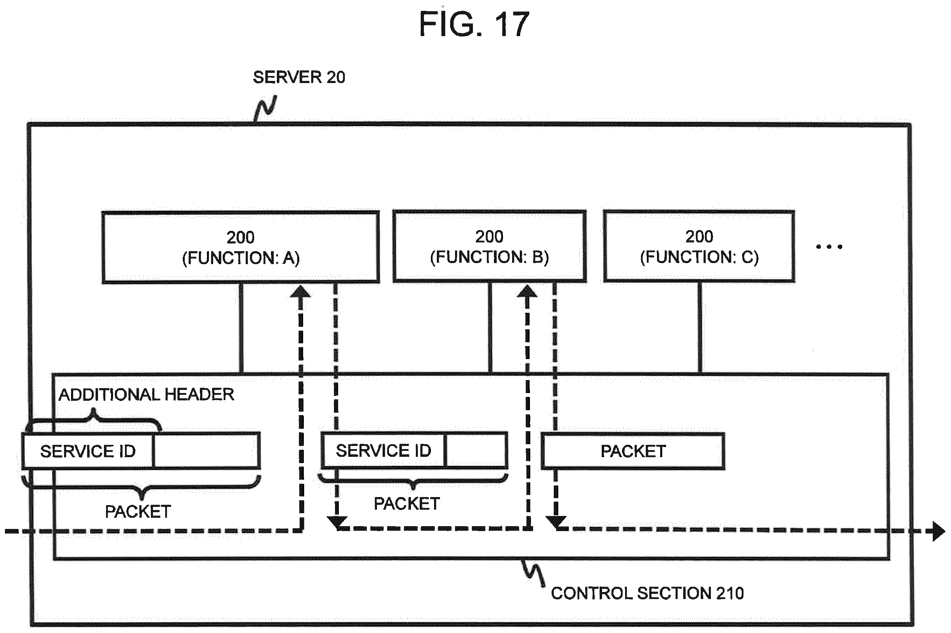

   Fig. 17 is a block diagram showing a third example of the functional configuration of the server according to the fifth exemplary embodiment.
[Fig. 18]

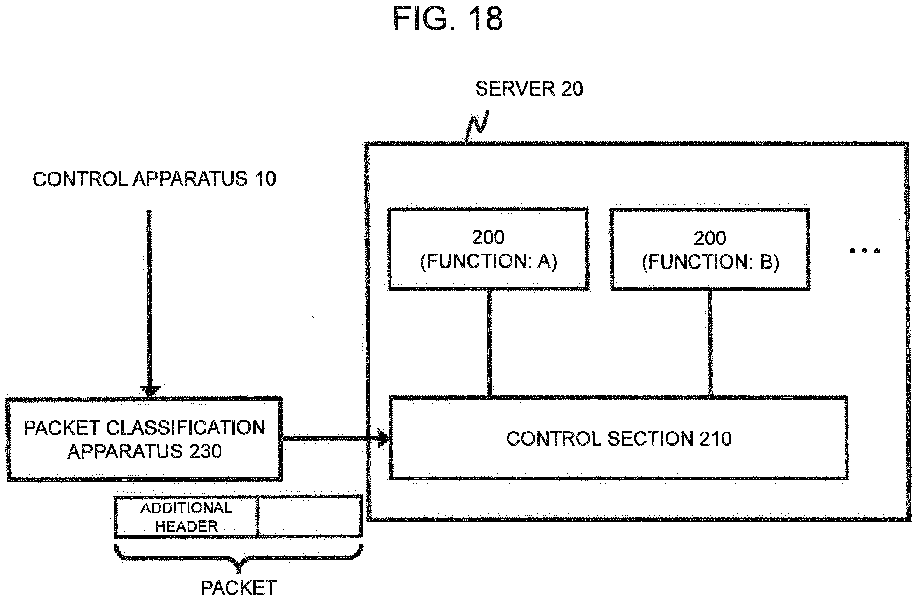

   Fig. 18 is an architecture diagram showing an example of a communication system according to the fifth exemplary embodiment.
[Fig. 19]

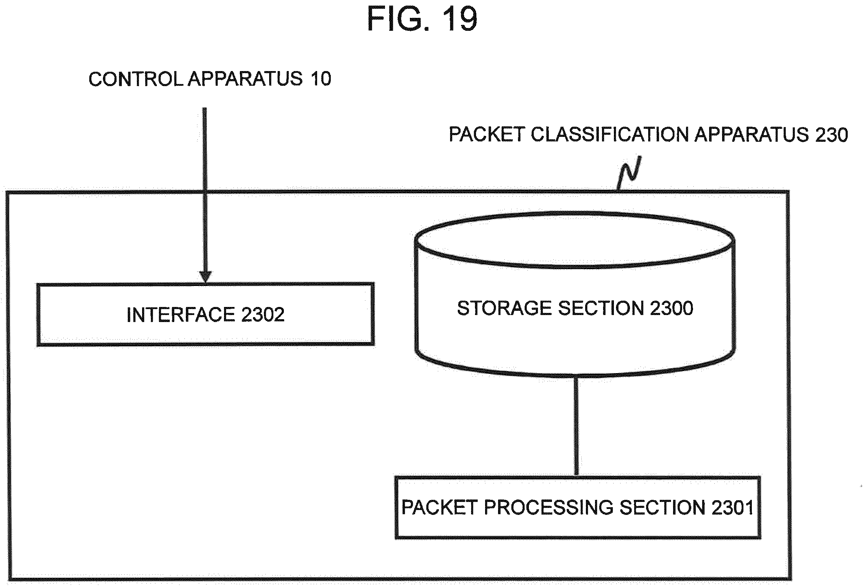

   Fig. 19 is a block diagram showing an example of a packet classification apparatus in the fifth exemplary embodiment.
[Fig. 20]

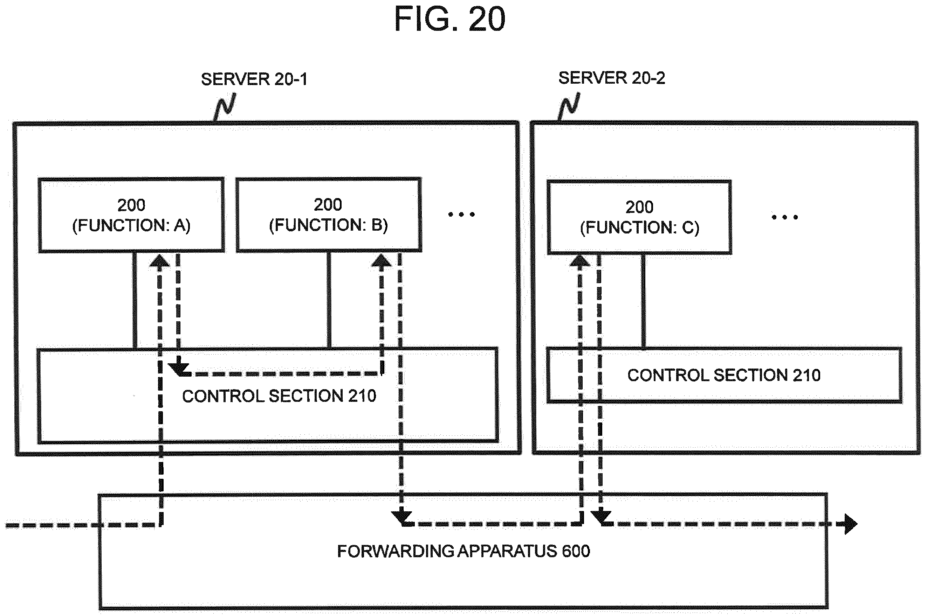

   Fig. 20 is an architecture diagram showing another example of the communication system according to the fifth exemplary embodiment.
[Fig. 21]

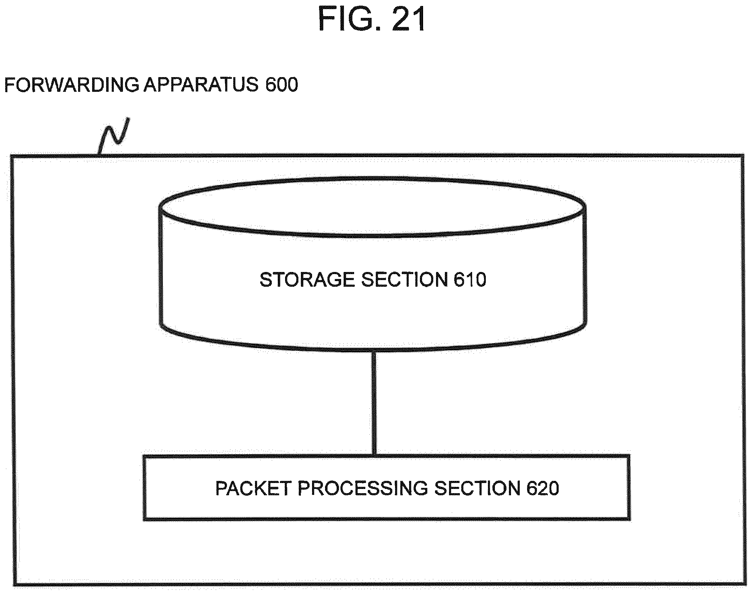

   Fig. 21 is a block diagram showing an example of a forwarding apparatus in the fifth exemplary embodiment.
[Fig. 22]

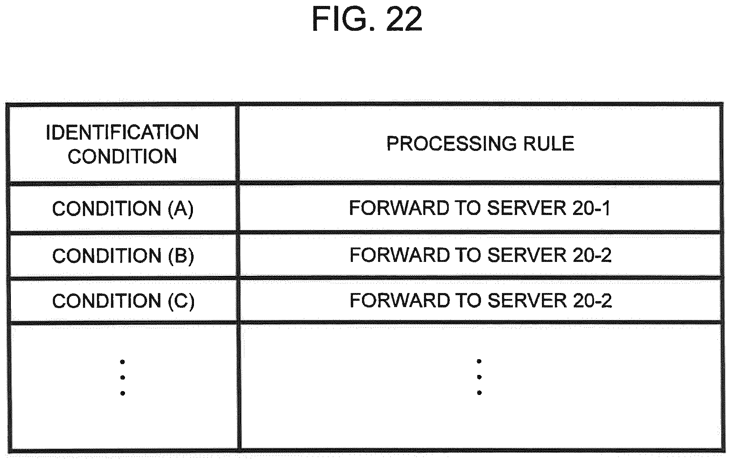

   Fig. 22 is a data structure diagram schematically showing a structural example of information retained by the forwarding apparatus shown in Fig. 21.
[Fig. 23]

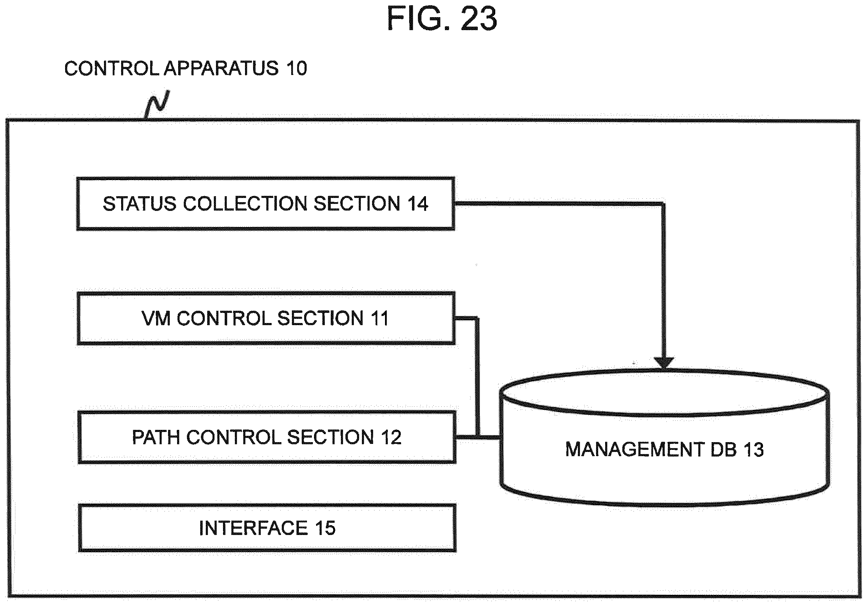

   Fig. 23 is a block diagram showing an example of the functional configuration of a control apparatus according to a sixth exemplary embodiment of the present invention.
[Fig. 24]

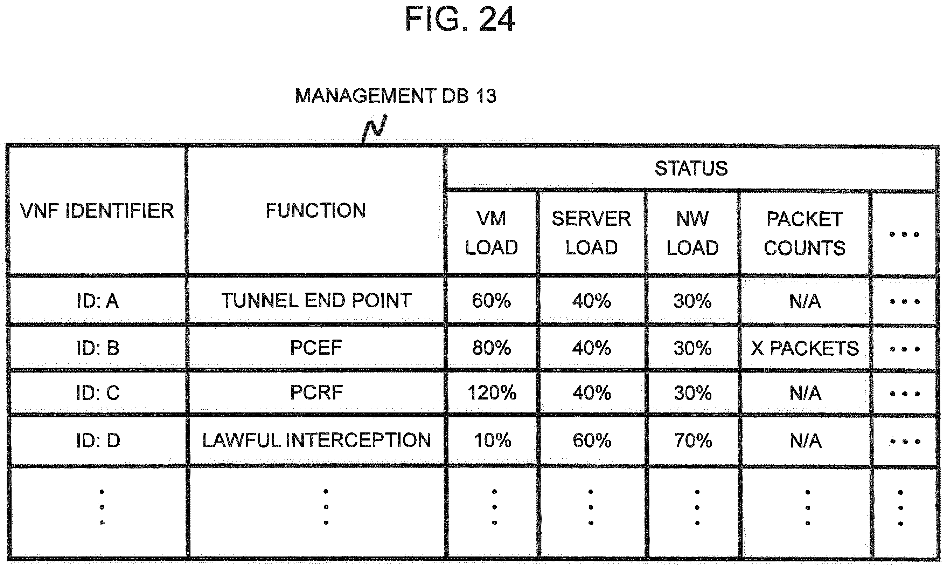

   Fig. 24 is a data structure diagram schematically showing a first structural example of information retained by a management DB shown in Fig. 23.
[Fig. 25]

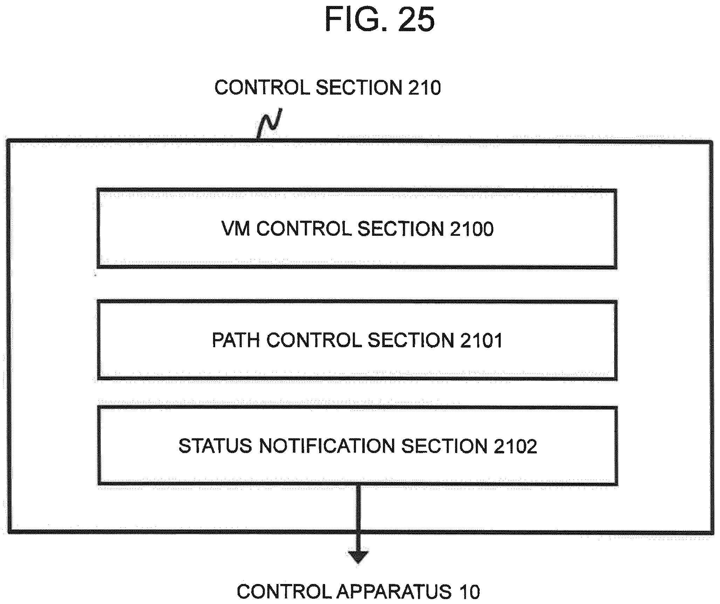

   Fig. 25 is a block diagram showing an example of the functional configuration of a control section of a server according to the sixth exemplary embodiment.
[Fig. 26]

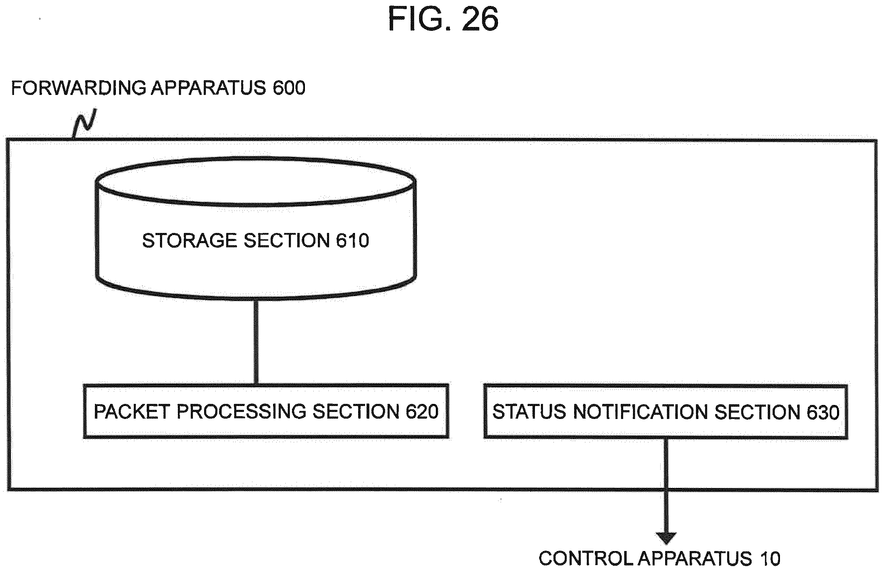

   Fig. 26 is a block diagram showing an example of the functional configuration of a forwarding apparatus in the sixth exemplary embodiment.
[Fig. 27]

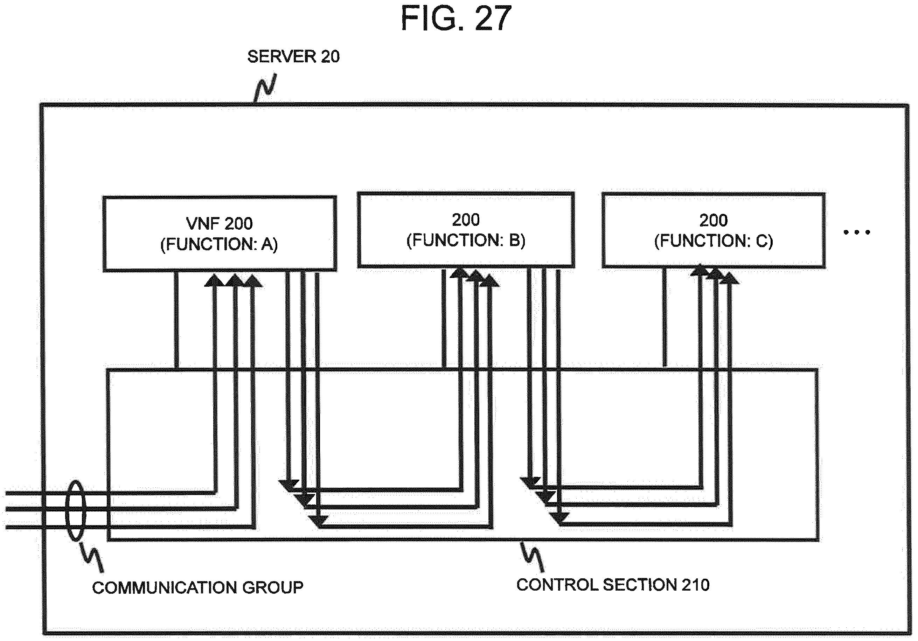

   Fig. 27 is a block diagram showing an example of the functional configuration of a server according to a seventh exemplary embodiment of the present invention.
[Fig. 28]

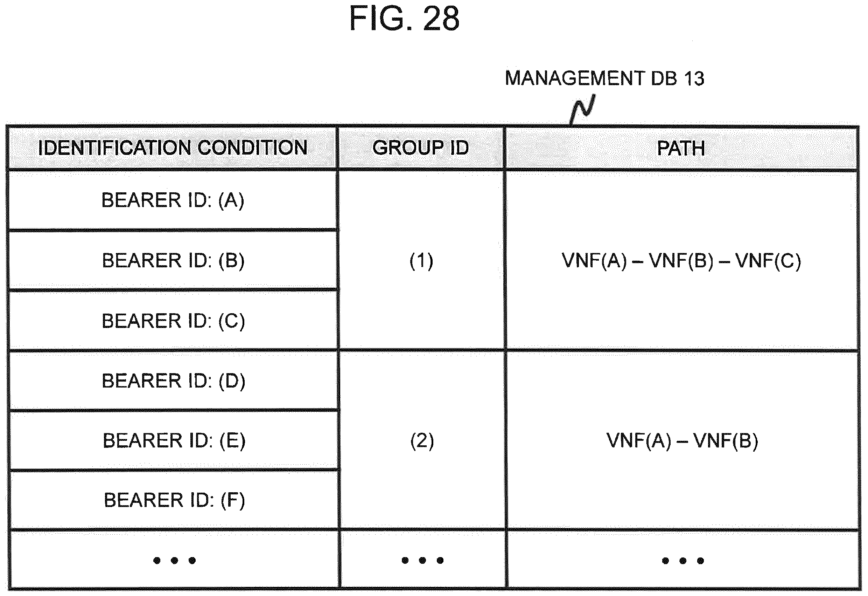

   Fig. 28 is a data structure diagram schematically showing a first structural example of information retained by a management DB in the seventh exemplary embodiment.
[Fig. 29]

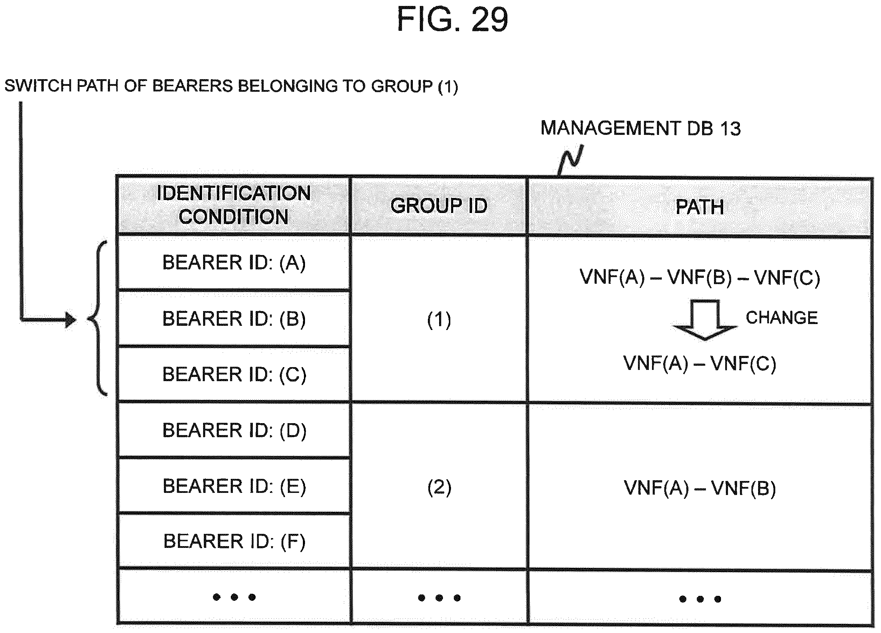

   Fig. 29 is a data structure diagram showing an example of information retained by the management DB, for schematically describing path change operation in the seventh exemplary embodiment.
[Fig. 30]

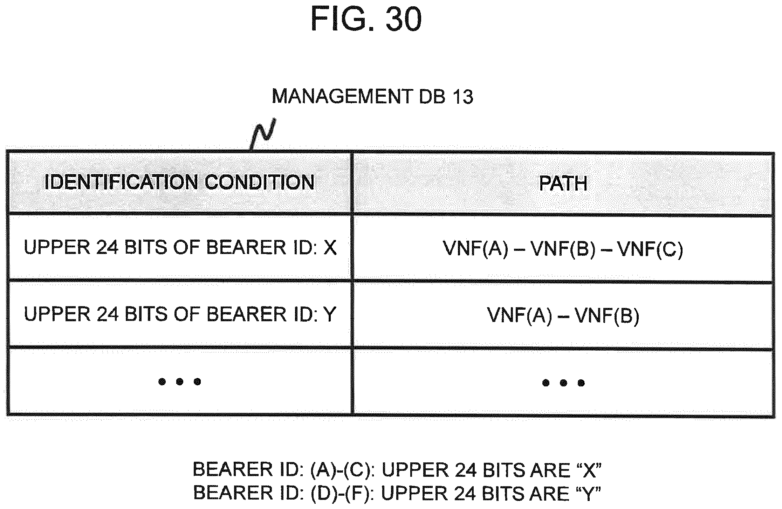

   Fig. 30 is a data structure diagram schematically showing a second structural example of the information retained by the management DB in the seventh exemplary embodiment.
[Fig. 31]

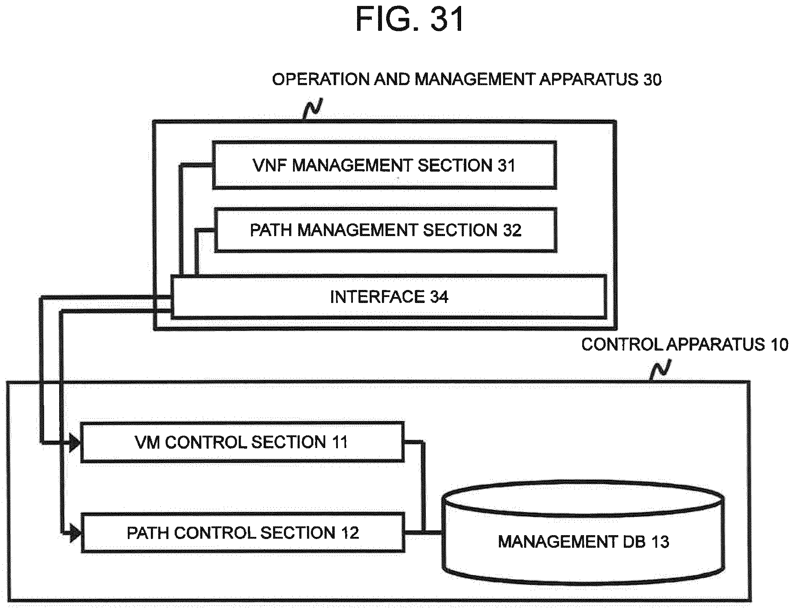

   Fig. 31 is a block diagram showing an example of the functional configuration of an operation and management apparatus according to an eighth exemplary embodiment of the present invention.
[Fig. 32]

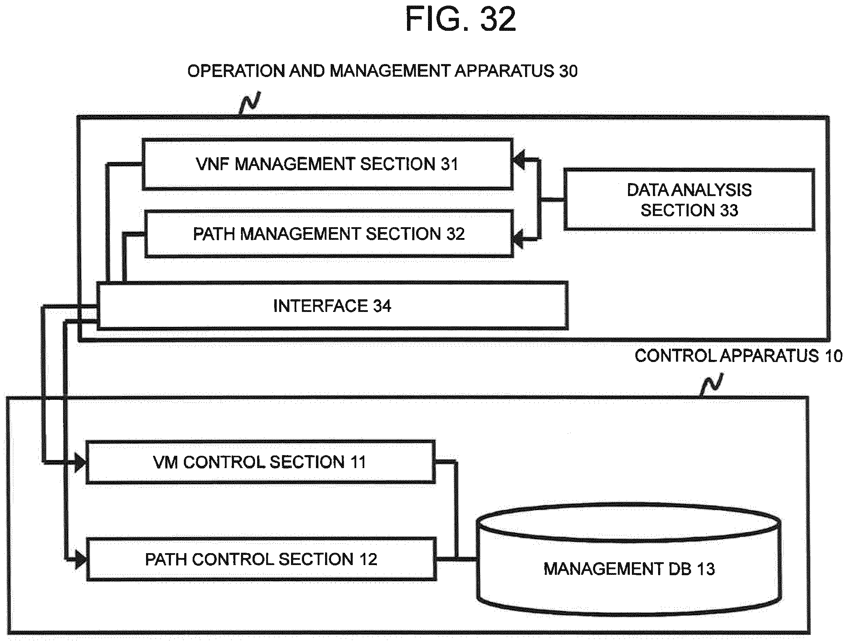

   Fig. 32 is a block diagram showing another example of the functional configuration of the operation and management apparatus according to the eighth exemplary embodiment.

### [Detailed Description]

Hereinafter, preferred embodiments of the present invention will be described. Each embodiment is shown for illustration, and the present invention is not limited to each embodiment.

### 1. First exemplary embodiment

According to a first exemplary embodiment of the present invention, a virtual machine is constructed for each of various network functions (NFs) included in network nodes of a communication system. Thus, for example, an additional virtual machine can be installed for each network function of a node, and the flexibility and adaptability of virtual machine control can be enhanced.

Fig. 1 shows an example of the architecture of a communication system according to the first exemplary embodiment. Fig. 1 illustrates an LTE (Long Term Evolution) communication system, but the communication system of the present invention is not limited to the example shown in Fig. 1.

In the example of Fig. 1, a terminal 1 connects to a base station 2 and accesses the Internet or the like via a core network. The core network includes, for example, gateways 3, an MME (Mobility Management Entity) 4, and the like. The gateways 3 include network nodes such as an S-GW (Serving Gateway) and a P-GW (Packet Data Netowork Gateway). The network nodes perform various signal processing related to communication services provided by the communication system. For example, the MME 4 performs signal processing related to mobility management of the terminal 1.

According to the first exemplary embodiment, it is possible to virtualize the network nodes (base station 2, gateways 3, and MME 4) illustrated in Fig. 1, for each network function included in each node. However, network nodes to be virtualized according to the present exemplary embodiment are not limited to the nodes illustrated in Fig. 1.

### 1.1) Server

Fig. 2 shows an example of the configuration of a server 20 that virtualizes a network node. A control section 210 of the server 20 is capable of operating a plurality of network functions A, B, C, ... executed by a network node on a plurality of virtual machines corresponding respectively to the network functions. That is, the control section 210 is capable of controlling a virtual machine for each network function of the network node, and operating the plurality of network functions individually.

For example, the control section 210 may be configured by using control software that can perform virtualization for a computer, such as hypervisor.

The plurality of network functions executed by the network node include, for example, functions related to signal processing performed by the network node, and through this signal processing, a service such as data communication is provided to a user.

For example, the network nodes illustrated in Fig. 1 include the following network functions.

### P-GW:

- Function of processing packets (User-Plane function)
- Function of managing charging status depending on communication (PCEF: Policy and Charging Enforcement Function)
- Function of controlling a policy such as QoS (PCRF: Policy and Charging Rule Function)
- Lawful interception (LI) function for intercepting communication S-GW:
- Function of processing packets (User-Plane function)
- Function of processing control signaling (C-Plane function)

### MME:

- Function of processing control signaling (C-Plane function); for example, setup/release of a session for communication, handover control, and the like
- Function of managing subscriber information in the communication system in cooperation with HSS (Home Subscriber Server)

### Base station:

- Function of processing a digital baseband signal
- Function of processing an analog RF (Radio Frequency) signal

The control section 210 can operate each of the above-mentioned network functions as a virtual network function (VNF: Virtual Network Function) 200 on a virtual machine. Note that the above-mentioned functions are listed for illustration, and functions that can be operate on virtual machines by the control section 210 are not limited to the above examples. Moreover, network nodes of the present invention are not limited to the above examples.

For example, it is also possible that the control section 210 operates the functions of a plurality of types of network nodes (network entities (1) and (2) in Fig. 3) on virtual machines, as in an example shown in Fig. 3.

Moreover, VNFs 200 may be deployed separately on a plurality of servers 20. For example, in the example of Fig. 2, the VNFs 200 corresponding to the functions A and B may be deployed on a server 20(1), and the VNF 200 corresponding to the function C may be deployed on a server 20(2).

The control section 210 can forward a received signal to a VNF 200 and have the VNF 200 perform signal processing corresponding to its functions. For example, each VNF 200 performs signal processing corresponding to its function on a signal, which is a packet or the like, such as communication data, bearer communication data, or a message to be received by a network node.

Fig. 4 shows an example of the configuration of the control section 210. For example, the control section 210 includes a VM (Virtual Machine) control section 2100 and a path control section 2101.

The VM control section 2100 controls a virtual machine for running a VNF 200 corresponding to signal processing performed by a network node. For example, the VM control section 2100 can perform at least one of activation, deletion, and deactivation of a virtual machine. Moreover, for example, the VM control section 2100 can also migrate a virtual machine in operation to another virtual machine.

The VM control section 2100 can also control activation/deactivation, migration, and the like of a virtual machine, depending on the status of the communication system. For example, the VM control section 2100 dynamically performs activation/deactivation, migration, and the like of a VNF 200, depending on the communication volume in the communication system, the congestion status therein, the load on the server 20, or the like. Moreover, for example, the VM control section 2100 performs control, such as activation of a new virtual machine and migration from a virtual machine in operation to another virtual machine, depending on the load on a virtual machine executing a VNF 200.

The path control section 2101 forwards a received signal it has received to VNFs 200. The VNFs 200 perform corresponding signal processing on the signal forwarded from the path control section 2101.

### 1.2) Operation

Fig. 5 shows an example of operation of the server 20 according to the first exemplary embodiment.

The control section 210 can control a virtual machine for each network function of a network node (Operation S10). For example, the control section 210 performs activation or deactivation of a virtual machine corresponding to each function of the network node.

The control section 210, when receiving a signal (Operation S11), forwards this received signal to a VNF 200 (Operation S12). Each VNF 200 performs corresponding signal processing on the signal forwarded from the control section 210 (Operation S13).

### 2. Second exemplary embodiment

According to a second exemplary embodiment of the present invention, it is possible to control a route of VNFs 200 through which a received signal is forwarded, depending on its signal type. VNFs 200 are selected depending on the signal type, whereby it is possible to achieve flexible signal processing according to communication. The technique according to the second exemplary embodiment is applicable to the above-described first exemplary embodiment and any of the under-described exemplary embodiments.

### 2.1) Server

As illustrated in Fig. 6, the control section 210 of a server 20 is capable of controlling a path representing VNFs 200 that a received signal is forwarded through (hereinafter, referred to as "VNF path"),. For example, the control section 210 can control a VNF path that a received signal travels along, depending on the signal type. The signal type is, for example, the type of a bearer that is a virtual connection to transmit a packet, the attribute of a packet identified based on information in the packet, or the like.

In the example of Fig. 6, the control section 210 sets up a VNF path through the VNFs (A), (B), and (C) for a signal (1), and sets up a VNF path through the VNFs (A) and (B) for a signal (2). The control section 210 can forward packets along the setup VNF paths. For example, the control section 210 can forward packets based on a MAC address, an IP address, or the like assigned to each VNF 200.

The path control section 2101 of the control section 210, which controls a VNF path representing VNFs 200 through which a received signal is transferred, can control such a VNF path depending on the signal type, according to the present exemplary embodiment.

For example, the path control section 2101 can control a VNF path, based on the communication volume of a user (terminal 1), the communication load on or communication volume in the communication system, the load status of the server 20, or the like

For example, the path control section 2101 controls a VNF path of a packet that belongs to a bearer, depending on the communication volume on this bearer. For example, the VNF path is changed when the communication volume exceeds a predetermined threshold.

The path control section 2101 can select a VNF 200 to be included in a VNF path, depending on the load status of a virtual machine. For example, the path control section 2101 preferentially selects a VNF 200 whose virtual machine is lightly loaded among a plurality of VNFs 200 having the same function, thus setting up the VNF path.

For example, the control section 210 may be configured by using a virtual switch (vSwitch: Virtual Switch), which is configured by using software.

### 2.2) Operation

Fig. 7 shows an example of operation of the server according to the second exemplary embodiment.

The control section 210 controls a virtual machine for executing a VNF 200 on the server 20 (Operation S20). For example, the control section 210 performs activation, deactivation, migration, and the like of a virtual machine. In the example of Fig. 7, the control section 210 activates virtual machines for executing the VNFs 200 corresponding to the functions A, B, and C of a network node, respectively.

When receiving the signal (1) (Operation S21), the control section 210 controls a VNF path so that the signal (1) will be transferred through its corresponding VNFs 200 (S22).

When receiving the signal (2) (Operation S23), the control section 210 controls a VNF path so that the signal (2) will be transferred through its corresponding VNFs 200 (Operation S24).

### 3. Third exemplary embodiment

In a third exemplary embodiment of the present invention, variations will be illustrated with respect to control of a virtual machine for executing a VNF 200. That is, according to the third exemplary embodiment, a virtual machine is controlled in various manners, whereby advantages can be obtained such as, for example, increased efficiency in use of computing resources (CPU, memory, storage, and the like) used for virtual machines, simplified management of virtual machine-related status, and the like. The technique according to the third exemplary embodiment is applicable to not only the above-described first and second exemplary embodiments but also any of the under-described exemplary embodiments. Hereinafter, the third exemplary embodiment will be described by using the configuration of the control section 210 shown in Fig. 4.

In the third exemplary embodiment, the VM control section 2100 of the control section 210 is capable of controlling, based on the type of a VNF 200, computing resources to allocate to a virtual machine corresponding to this VNF 200. For example, the VM control section 2100 can control computing resources to allocate to a virtual machine so that the frequency of dynamic scaling of virtual machines (e.g., dynamic activation, deactivation, deletion, migration, and the like of a virtual machine) corresponding to a VNF 200 varies depending on the type of the VNF 200. Moreover, the VM control section 2100 can control computing resources to allocate to a virtual machine so that degradation in performance due to dynamic scaling of the VNF 200 that manages communication status will be suppressed.

### <First example>

Fig. 8 shows a first example of the configuration of a server 20 according to the third exemplary embodiment.

In the example shown in Fig. 8, the VM control section 2100 of the control section 210 controls computing resources to allocate to a virtual machine corresponding to a VNF 200, depending on a function provided by the VNF 200. More specifically, the VM control section 2100 changes shares of computing resources to allocate to VNFs 200, depending on the respective functions (functions A, B, and C in Fig. 8) provided by the VNFs 200. In this example, the VM control section 2100 controls resource amounts (Low, Mid, High) to allocate to the individual VNFs 200, depending on the functions of the VNFs 200.

Some network nodes are required to include a function of managing communication status that changes with signal processing. For example, a MME 4 includes a function of managing bearer contexts. A bearer context is described in, for example, subchapter 5.7 and others of a document (TS23.401 V12.3.0) concerning technical specifications about wireless communication (3GPP: 3rd Generation Partnership Project). Moreover, a P-GW includes a function of managing charging based on the communication amount (PCEF) in some cases.

In a case where a VNF 200 manages communication status, the VM control section 2100, for example, when migrating this VNF 200 to another virtual machine, migrates the VNF 200 inclusive of the communication status to another virtual machine. Accordingly, it is conceivable that the larger the amount of information on the communication status is, the longer time the migration of the communication status requires, resulting in the lowering performance of a communication service related to the VNF 200 during migration. Accordingly, in a case where a VNF 200 provides a function of managing communication status, execution of scale-out, such as installation or migration, of such a VNF 200 is suppressed, whereby it is possible to prevent the performance of a communication service from lowering.

In the first example shown in Fig. 8, the VM control section 2100 allocates more resources to a VNF 200 having a communication status management function than resources that would be set based on a performance requirement or the like. That is, the VMF 200 is allocated redundant resources, whereby scale-out such as additional installation or migration of a VNF is suppressed, and lowering of performance as described above can be avoided.

As a modified example, it is also possible that the VM control section 2100 controls resource amounts to allocate to a VNF 200 depending on the frequency of updating communication status by a VNF 200, not depending on a function provided by a VNF 200. For example, the VM control section 2100 may allocate redundant resources to a VNF 200 that provides a function with a high frequency of updating communication status (e.g., P-GW's PCEF or the like).

### <Second example>

Fig. 9 shows a second example of the configuration of the server 20 according to the third exemplary embodiment.

In the example shown in Fig. 9, the VM control section 2100 controls the frequency of dynamic scaling such as installation or migration of a VNF 200 (hereinafter, referred to as "frequency of changing"), depending on the function of a VNF 200. For example, since installation or migration of a VNF 200 is performed depending on the load status of the communication system or a virtual machine, the frequency of changing a VNF can be controlled, for example, by adjusting a threshold of the load status for performing installation or migration of a VNF 200.

For example, the VM control section 2100 can control the frequency of changing a VNF, depending on the presence/absence of a communication status management function and the frequency of updating communication status. More specifically, in the case where a VNF 200 includes a function that updates communication status frequently (e.g., PCEF), the VM control section 2100 sets the frequency of changing this VNF 200 at a lower level than a frequency of changing set based on a performance requirement or the like. Moreover, in the case where a VNF 200 includes a function that updates communication status less frequently (e.g., U-Plane function), the VM control section 2100 sets the frequency of changing this VNF 200 at a higher level than, or the same level as, a frequency of changing set based on a performance requirement or the like.

The frequency of changing a VNF is controlled in this manner, whereby lowering of performance due to scale-out of a VNF 200 can be prevented.

### <Third example>

Fig. 10 shows a third example of the configuration of the server 20 according to the third exemplary embodiment.

In the example shown in Fig. 10, the VM control section 2100 is capable of controlling each VNF 200 in such a manner that communication status related to each of the plurality of VNFs 200 is centrally managed.

As illustrated in FIG. 10, the server 20 includes a shared DB (Data Base) 220. The shared DB 220 is a database storing information related to communication status. For example, each VNF 200 activated on the server 20 is capable of referring to the shared DB 220 and acquiring the communication status-related information. Moreover, for example, each VNF 200 can store communication status-related information that has been changed in accordance with signal processing in the shared DB 220. Note that the shared DB 220 may be provided outside the server 20 and exchange information via a network or through a dedicated line.

The VM control section 2100 controls each VNF 200 in such a manner that communication status related to signal processing performed by each VNF 200 is managed in the shared DB 220.

The communication status-related information is managed in the database shared among the VNFs 200, whereby a function of managing communication status is separated from the VNFs 200. Accordingly, the VM control section 2100, for example, even when migrating a VNF 200 to another virtual machine, does not need to include the communication status, whereby lowering of performance due to scale-out of VNF can be prevented. The migrated VNF 200 can take over the communication status related to the migration-source VNF 200 by referring to the shared DB 220.

It is also possible that the third example shown in Fig. 10 is combined with the first or second example shown in Fig. 8 or 9.

### 4. Fourth exemplary embodiment

According to a fourth exemplary embodiment of the present invention, a control apparatus 10 controls VNFs 200 on a server 20. Since the VNFs 200 can be centrally controlled by the control apparatus 10, efficiency in management of the VNFs 200 is increased. The technique according to the fourth exemplary embodiment is applicable to the first to third exemplary embodiments and any of the under-described exemplary embodiments.

Fig. 11 shows an example of the configuration of the control apparatus 10. The control apparatus 10 includes a VN control section 11, a path control section 12, a management DB 13, and an interface 15. The control apparatus 10 is capable of communicating with the server 20 via the interface 15.

The VM control section 11 can instruct the control section 210 of the server 20 to control a VNF 200 as in the above-described first to third exemplary embodiments.

For example, the VM control section 11 instructs the VM control section 2100 of the control section 210 to activate/deactivate a virtual machine that executes a VNF 200, to migrate a virtual machine in operation to another virtual machine, or the like.

For example, the VM control section 11 can instruct the VM control section 2100 of the control section 210 to control resources to allocate to a VNF 200 depending on a function provided by the VNF 200, as in the third exemplary embodiment. Alternatively, the VM control section 11 can also instruct the control section 210 to control a VNF 200, as in exemplary embodiments described below.

The path control section 12 can instruct the control section 210 of the server 20 to control a VNF path that a received signal travels along, as in the above-described first and second exemplary embodiments.

For example, the path control section 12 notifies information indicating a VNF path corresponding to a signal type to the path control section 2101 of the control section 210. The path control section 2101 refers to the notified information, identifies a VNF path corresponding to the received signal, and forwards the received signal to VNFs 200 on the identified VNF path. The VNFs 200 each process the received signal forwarded from the path control section 2101.

For example, the path control section 12 can determine a VNF path, based on the communication volume of a user (terminal 1), the communication load on and communication volume in the communication system, the load status of the server 20, or the like. The path control section 12 notifies the determined VNF path to the path control section 2101.

The VM control section 11 can also instruct the control section 210 to control a VNF path as in exemplary embodiments described below.

### <First example>

Fig. 12 shows an example of the data structure of the management DB 13. The management DB 13 includes an identification condition for the path control section 2101 of the server 20 to identify a communication type, and information indicating a VNF path corresponding to this identification condition. For example, the path control section 12 determines a VNF path based on the communication type. The path control section 12 stores the determined VNF path and the condition for identifying the communication type corresponding to this VNF path in the management DB 13.

For example, the path control section 12 sets an identification condition by using information with which a UE (User Equipment) can be identified, such as IMSI (International Mobile Subscriber Identity) or TMSI (Temporary Mobile Subscriber Identity). Moreover, for example, the path control section 12 sets an identification condition by using information with which a bearer can be identified, such as TEID (Tunnel Endpoint Identifier) or GRE (Generic Routing Encapsulation) key.

The path control section 12 can determine a VNF path based on a predetermined parameter. For example, the path control section 12 can determine a VNF path based on the communication volume (e.g., a count of packets), the status (e.g., load status) of the server 20 or a virtual machine, or the like. Moreover, the path control section 12 can compare the above-mentioned parameter with a predetermined threshold to change a VNF path depending on the comparison result.

The path control section 12 can select a VNF 200 to be included in a VNF path, based on the load status of the server 20 or a virtual machine. For example, among a plurality of VNFs 200 including the same function, the path control section 12 preferentially selects a VNF 200 virtualized on a virtual machine under a smaller load, thus setting up a VNF path. Moreover, for example, among a plurality of VNFs 200 including the same function, the path control section 12 preferentially selects a VNF 200 operating on a server 20 under a smaller load, thus setting up a VNF path.

### <Second example>

Fig. 13 shows another example of the data structure of the management DB 13. In this example, the path control section 12 can generate information representing a VNF path by using an identifier for identifying each VNF 200 and store it in the management DB 13.

### <Third example>

When the identifier of a VNF 200 is used as in Fig. 13, the VM control section 11 may manage the identifier and an attribute of the VNF 200 (e.g., a function included in the VNF 200) corresponding to this identifier. The VM control section 11 can store information including an identifier and a function of a VNF 200 corresponding to this identifier in the management DB 13, as illustrated in Fig. 14. The path control section 12 can refer to the information illustrated in Fig. 14 to determine a VNF path.

Note that the above-described functions of the control apparatus 10 may be provided to an MME 4 or a gateway 3 (e.g., PCRF function of a P-GW). That is, it is also possible that the MME 4 or gateway 3 operates as the above-described control apparatus 10.

### 5. Fifth exemplary embodiment

A fifth exemplary embodiment of the present invention shows an example of a method for processing a received signal along a VNF path. The technique according to the fifth exemplary embodiment is applicable to the above-described first to fourth exemplary embodiments and any of the under-described exemplary embodiments.

According to the fifth exemplary embodiment, the control section 210 is capable of forwarding a received signal to a virtual machine which operates a network function corresponding to the received signal, based on tag information included in the received signal. The control section 210 of a server 20 can identify VNFs 200, or a VNF path, corresponding to the signal, based on the tag information. For example, the tag information is generated based on a predetermined rule (e.g., a protocol prescribed in standard specifications or the like) so as to indicate the VNFs 200 or VNF path corresponding to the signal.

### <First example>

As illustrated in Fig. 15, the control section 210 refers to an additional header added as tag information to a received packet and forwards the packet along a VNF path. The additional header includes information about the VNF path. Since the control section 210 can forward a packet based on information included in a received packet, it is not necessary to manage route information corresponding to a VNF path. Accordingly, the control section 210 can perform packet forwarding along a VNF path, with a simpler configuration.

For example, the control section 210 identifies VNFs 200 included in the VNF path and their order along the VNF path based on the information of the additional header and forwards the packet based on the identified VNFs 200 and their order. The control section 210 may delete the additional header from the packet when processing at the last VNF 200 on the VNF path is completed.

### <Second example>

As illustrated in Fig. 16, it is also possible that the control section 210 refers to an additional header including the identifiers of VNFs 200 to forward the packet. The additional header includes the identifiers of the VNFs 200 corresponding to a VNF path. Moreover, the additional header stores the identifiers of the VNFs 200 in the order of the VNFs 200 along the VNF path.

The control section 210 refers to the identifiers in the order in which they are stored in the additional header and forwards the packet to the VNFs 200 corresponding to the identifiers. In the example of Fig. 16, the control section 210 refers to an identifier A (ID: A) and an identifier B (ID: B) in this order to forward the packet to the VNF 200 corresponding to each identifier. The control section 210 may delete an identifier it has referred to from the additional header as in the example of Fig. 16, in which the identifiers are deleted in the order of ID: A and ID: B.

### <Third example>

As illustrated in Fig. 17, it is also possible that the control section 210 refers to an additional header including an identifier which indicates a communication service related to the packet ("service ID" in Fig. 16) to forward the packet. The service ID is, for example, information with which a communication service, such as a video distribution service or an SNS (Social Network Service) service, can be identified. For example, the control section 210 has information about VNF paths associated with individual service IDs. Based on this information and a service ID added to a received packet, the control section 210 identifies a VNF path associated with this service ID. The control section 210 may delete the additional header from the packet when processing at the last VNF 200 on the VNF path is completed.

In the fifth exemplary embodiment, a function of adding an additional header to a packet may be deployed in the communication system. For example, the function of adding an additional header is deployed at a boundary with an external network in a data center where the server 20 is placed. The function of adding an additional header adds an additional header to a packet received from the external network and forwards the packet into the data center.

### <Function of adding an additional header>

Fig. 18 shows an example of the system in which the above-described function of adding an additional header is deployed. Referring to Fig. 18, a packet classification apparatus 230 adds an additional header to a packet. For example, the packet classification apparatus 230 is deployed at a boundary between a data center and an external network (e.g., at the edge of the communication system). The packet classification apparatus 230 classifies a received packet and adds to the received packet an addition header according to the content of the received packet. For example, the packet classification apparatus 230 can generate an additional header based on a predetermined rule such that the additional header indicates a VNF path that a packet travels along. For example, the packet classification apparatus 230 can identify VNFs 200 corresponding to the packet.

Fig. 19 shows an example of the configuration of the packet classification apparatus 230. The packet classification apparatus 230 includes a storage section 2300, a packet processing section 2301, and an interface 2302. The packet classification apparatus 230 can communicate with a control apparatus 10 via the interface 2302.

For example, the storage section 2300 includes information structured in a manner similar to that of the above-described management DB 13 illustrated in Fig. 12 or 13. Moreover, the storage section 2300 may have information including an identification condition for identifying the type of a communication service and a service ID corresponding to this identification information.

The packet processing section 2301 refers to the storage section 2300 and adds an additional header to a packet. For example, the packet processing section 2301 identifies a received packet based on an identification condition stored in the storage section 2300 and adds to the packet, as an additional header, information indicating a VNF path corresponding to the identification information that matches the packet.

### <Example of system architecture>

As illustrated in Fig. 20, it is also possible that a VNF path is a path passing through a plurality of servers 20. In the example shown in Fig. 20, a VNF path passes through VNFs 200 operating on a server 20-1 and a VNF 200 operating on a server 20-2.

Note that the packet classification apparatus 230 may be configured by using a virtual switch or the like, which is configured by using software such as virtual machine. For example, the functions included in the packet classification apparatus 230 can be executed by a virtual switch operating on a server that is deployed at the edge of the communication system.

A forwarding apparatus 600 can forward a packet along a path passing through the plurality of servers 20. In the example of Fig. 20, the forwarding apparatus 600 forwards a packet processed by the VNF 200 including a function B to the VNF 200 (VNF including a function C) operating on the server 20-2.

Fig. 21 shows an example of the configuration of the forwarding apparatus 600. The forwarding apparatus 600 includes a storage section 610 and a packet processing section 620.

For example, the storage section 610 includes information structured as illustrated in Fig. 22. For example, the control apparatus 10 can notify the information illustrated in Fig. 22 to the forwarding apparatus 600. The storage section 610 includes information including a packet identification condition and a packet processing rule corresponding to this identification condition, as in Fig. 22. For example, the identification condition is a condition for identifying a packet based on information with which a UE can be identified such as IMSI or TMSI, or information with which a bearer can be identified such as TEID or GRE key. Moreover, for example, the identification condition may be a condition for identifying a packet based on the above-described additional header.

The packet processing section 620 compares identification conditions as described above with a packet and processes the packet in accordance with a processing rule corresponding to an identification condition that matches the packet.

### 6. Sixth exemplary embodiment

According to a sixth exemplary embodiment of the present invention, a control apparatus 10 monitors the status of a server 20, virtual machine and the like and controls VNFs 200 or a VNF path depending on the monitored result. Accordingly, according to the sixth exemplary embodiment, the control apparatus 10 can perform resource control depending on the status of the communication system. The technique according to the sixth exemplary embodiment is applicable to the above-described first to fifth exemplary embodiments and any of the under-described exemplary embodiments.

### 6.1) Control apparatus

Fig. 23 shows the configuration of the control apparatus 10 according to the present exemplary embodiment. The control apparatus 10 includes a status collection section 14 in addition to the configuration illustrated in the above-described exemplary embodiments.

The status collection section 14 collects information from the server 20 or a forwarding apparatus 600 and, based on the collected information, stores information structured as illustrated in Fig. 24 in the management DB 13.

The status collection section 14 can store status corresponding to each VNF 200 in the management DB 13. For example, the status collection section 14 can collect the load status of a virtual machine corresponding to each VNF 200 or of the server 20 ("VM Load" and "Server Load" in Fig. 24) and store them in the management DB 13. Further, the load status () of a communication path related to each VNF 200 may be also stored, as shown as "NW Load" in Fig. 24.

Moreover, the status collection section 14 can also collect the number of packets () counted by a VNF 200 including a predetermined function (e.g., PCEF), as shown as "Packet Counts" in Fig. 24. In the example of Fig. 24, the status collection section 14 can collect, for each bearer, the number of packets counted by a VNF 200 including the PCEF function and store them in the management DB 13.

The path control section 12 of the control apparatus 10 can monitor, for each bearer, whether or not the number of packets counted by the VNF 200 including the PECF function exceeds a predetermined threshold. For example, the path control section 12 can delete the VNF 200 including the PCEF function from a VNF path related to a bearer where the number of packets has exceeded the predetermined threshold. In some cases, a user makes a contract with a communication operator under which the user is charged a fixed-price fee (Flat Rate) regardless of the number of packets after the number of packets has exceeded a predetermined threshold. In this case, after the number of packets has exceeded the predetermined threshold, the communication operator can charge the user even if the VNF 200 including the PCEF function does not count the number of packets. Accordingly, the VNF 200 including the PCEF function is deleted from the VNF path as described above, whereby the path control section 12 can allocate the resources of this VNF 200 to another bearer.

The VM control section 11 can monitor the amount of control signals (C-Plane Signaling) at a network node, based on the information collected by the status collection section 14. The VM control section 11 can additionally install a VNF having a function for processing control signals (e.g., a VNF corresponding to the C-plane function of a MME 4 or the C-plane function of a gateway 3), responding to an increase in control signals.

For example, the path control section 12 can control a VNF path so that a VNF 200 having the lawful interception function of a P-GW will be included in the VNF path, depending on the location of a UE monitored by the status collection section 14. For example, in a case where there is a country where the lawful interception function is required of a P-GW, the path control section 12 performs control so that a VNF 200 having the required function will be included in a VNF path, depending on the location of a UE.

### 6.2) Server

Fig. 25 shows an example of the configuration of a control section 210 in the server 20 according to the sixth exemplar embodiment. The control section 210 includes a status notification section 2102 in addition to the configuration illustrated in the above-described exemplary embodiments.

The status notification section 2102 can monitor the load status of a virtual machine corresponding to a VNF 200, the load status of the server 20, communication status related to the VNF 200 or server 20, and the like. Moreover, the status notification section 2102 can also monitor the operation status of each VNF 200 (e.g., the number of packets counted by each VNF 200). The status notification section 2102 notifies the monitored information to the control apparatus 10. The status collection section 14 of the control apparatus 10 stores information in the management DB 13, based on the information notified from the status notification section 2102 of the server 20.

### 6.3) Forwarding apparatus

Fig. 26 shows an example of the configuration of the forwarding apparatus 600 in the sixth exemplary embodiment. The forwarding apparatus 600 includes a status notification section 630 in addition to the configuration illustrated in the above-described exemplary embodiments. The status notification section 630 monitors communication status such as the traffic volume and the load on the forwarding apparatus 600. The status notification section 630 notifies the monitored information to the control apparatus 10.

### 7. Seventh exemplary embodiment

According to a seventh exemplary embodiment of the present invention, a VNF path is set up for each group including a plurality of types of signals. Accordingly, a VNF path related to a plurality of types of signals can be controlled collectively, and efficiency in management of the communication system is increased. The technique according to the seventh exemplary embodiment is applicable to the above-described first to sixth exemplary embodiments and any of the under-described exemplary embodiments.

Fig. 27 shows an example of the configuration of a server according to the seventh exemplary embodiment. A control section 210 of the server 20 can set up a VNF path for each group of a plurality of signals. For example, the control section 210 can set up a VNF path for each group of a plurality of bearers.

The control section 210 can perform forwarding based on an additional header as illustrated in Figs. 15 to 19 in the fifth exemplary embodiment. That is, a received signal can be forwarded based on an additional header including information about VNFs 200 or a VNF path corresponding to a group as described above.

A control apparatus 10 can manage a plurality of signals as a group and can control a VNF path on a group-by-group basis. Moreover, the control apparatus 10 can instruct the packet classification apparatus 230 in the fifth exemplary embodiment to add to a packet an additional header corresponding to a group as described above.

Fig. 28 shows an example of the data structure of the management DB 13 in the control apparatus 10. For example, the path control section 12 of the control apparatus 10 can instruct the control section 210 of the server 20 to control a VNF path, based on the information illustrated in Fig. 28.

The management DB 13 includes an identification condition set based on the identifier of a bearer such as TEID, a group ID indicating a group of a plurality of bearers, and information about a VNF path corresponding to this group, as illustrated in Fig. 28.

For example, the control apparatus 10 can group bearers, based on the attribute of a UE corresponding to each bearer. Examples of UE attribute are listed below.
- Area where a UE is staying (E-UTRAN Cell ID or the like)
- Charging characteristic with respect to a UE (normal charging, pre-paid charging, flat rate, or the like)
- Communication status of a UE (whether or not a UE has made a certain volume of communication or more within a certain period of time)
- Operator ID (the ID of the operator of a core network to which a terminal 1 is connected)
- Packet Data Network (PDN) to which a UE is connected
- QoS characteristic
- State of a UE (IDLE state or CONNECTED state): IDLE state means, for example, a state where a UE is not consecutively exchanging control signals for session management and mobility management with a core network, or a state where wireless connection with a base station is released. CONNECTED state means, for example, a state where a UE is consecutively exchanging control signals for session management and mobility management with a core network, or a state where a UE is wirelessly connected to a base station.

Note that the above-described UE attributes are shown for illustration, and it is also possible that the control apparatus 10 groups bearers based on another attribute. For example, the control apparatus 10 can group bearers based on UE (User Equipment)-related information of the "EPS Bearer Context" disclosed in subchapter 5.7 of standard specifications (3GPP TS23.401).

Moreover, the control apparatus 10 can also group bearers based on the content of a contract between the user of a UE and a carrier. For example, it is possible that the control apparatus 10 groups those bearers associated with users who have made contracts for higher fees (e.g., "Premium Subscribers") than other users with a carrier, and/or groups those bearers associated with users under normal contracts.

Further, the control apparatus 10 can also group bearers based on information about the location of a UE (e.g., GSP information or information on a base station to which a terminal 1 is attaching). For example, it is possible to group the bearers of UEs in proximity to each other based on their location-related information.

Furthermore, the control apparatus 10 can also group bearers based on QoS (Quality of Service) information on each bearer. For example, the control apparatus 10 can group bearers based on a QCI (Quality Class Indicator) corresponding to each bearer.

As illustrated in Fig. 29, the path control section 12 of the control apparatus 10 can instruct the control section 210 of the server 20 to change a VNF path on a group ID basis,. Accordingly, the path control section 12 can collectively control a VNF path with respect to a plurality of bearers belonging to a group. In the example of Fig. 29, the path control section 12 instructs the control section 210 to change a VNF path corresponding to a group (1). For example, the control section 210 has information similar to the database illustrated in Fig. 28 and can identify a bearer group, bearers belonging to this group, and a VNF path corresponding to this group. The control section 210 can change the VNF path corresponding to the bearer group in response to the instruction from the path control section 12.

As illustrated in Fig. 30, the identifier (e.g., TEID) of each bearer may be assigned in such a manner that each of the identifiers of a plurality of bearers belonging to a group can be collectively identified. For example, a TEID is assigned to each of a plurality of bearers belonging to a group such that the TEIDs, each of which is composed of 32-bit information, will have the same information of the uppermost 24 bits. By assigning TEIDs in this manner, the control apparatus 10 and the control section 210 of the server 20 can collectively identify a plurality of bearers belonging to a group based on the upper 24-bit information of their TEIDs.

### 8. Eighth exemplary embodiment

According to an eighth exemplary embodiment of the present invention, the operator of the communication system sets operation policies on a control apparatus 10, and the control apparatus 10 can automatically perform control of VNFs 200 or a VNF path in accordance with the set operation policies. Automatic operation can be performed by the control apparatus 10, whereby efficiency in operation of the communication system is increased. The technique according to the eighth exemplary embodiment is applicable to the above-described first to seventh exemplary embodiments and any of the under-described exemplary embodiments.

In the eighth exemplary embodiment, the operator of the communication system can use an operation and management apparatus 30 to set operation policies on the control apparatus 10. Note that the operator can also set operation policies by directly manipulating the control apparatus 10.

Fig. 31 shows an example of the configuration of the operation and management apparatus 30. The operation and management apparatus 30 includes a VNF management section 31, a path management section 32, and an interface 34. The operation and management apparatus 30 can communicate with the control apparatus 10 via the interface 34.

The VNF management section 31 can set a virtual machine operation policy with respect to a VNF 200, on a VM control section 11 of the control apparatus 10. For example, the VNF management section 31 can set on the VM control section 11 a parameter for triggering activation, deactivation, migration, or the like of a virtual machine and a threshold for determining necessity or unnecessity to perform activation, deactivation, migration, or the like of a virtual machine based on this parameter.

The parameter for triggering activation, deactivation, migration, or the like of a virtual machine is, for example, the load on a virtual machine, the load on a server 20, the virtual machine-related communication load, the communication volume at a virtual machine, or the like. For example, the VM control section 11 can acquire information about the above-mentioned parameter via the status collection section 14 illustrated in the fifth exemplary embodiment. The VM control section 11 compares the acquired information with the threshold notified from the operation and management apparatus 30 and determines necessity or unnecessity to perform activation, deactivation, deletion, migration, or the like of a virtual machine.

For example, the VNF management section 31 may set on the VM control section 11 an operation policy for changing the allocation of computing resources (CPU, memory, and the like) for a virtual machine depending on the function of a VNF 200, as shown in Fig. 8 in the third exemplary embodiment. The VM control section 11 controls the control section 210 of the server 20 so that resources for a virtual machine will be allocated in accordance with this operation policy.

For example, the VNF management section 31 may set on the VM control section 11 an operation policy for changing the frequency of activation, deactivation, migration, or the like of a virtual machine depending on the function of a VNF 200, as shown in Fig. 9 in the third exemplary embodiment. For example, the VNF management section 31 sets a threshold for performing activation, deactivation, migration, or the like of a virtual machine, based on the type of a function provided by a VNF 200. The VM control section 11 operates a virtual machine in accordance with the policy notified from the VNF management section 31, whereby the frequency of VNF activation, deactivation, migration, or the like can be changed depending on the type of a VNF 200.

The path management section 32 can set an operation policy with respect to a VNF path on the path control section 12 of the control apparatus 10. For example, the path management section 32 can set a policy for configuring a VNF path, a policy for changing a VNF path, and the like on the path control section 12.

For example, the path management section 32 can set on the path control section 12 an operation policy for selecting a VNF 200 to be included in a VNF path based on the attribute of a bearer, the attribute of a UE associated with a bearer, the type of a communication service, or the like. For example, the path management section 32 can set on the path control section 12 an operation policy for selecting a VNF 200 based on the location of a UE. For example, the path management section 32 can set an operation policy such that a VNF 200 having the lawful interception function of a P-GW will be included in a VNF path, depending on the location of a UE. For example, in the case where there is a country where the lawful interception function is required as a function to be included in a P-GW, the path management section 32 can set an operation policy such that a VFN 200 having the required function will be included in a VNF path, depending on the location of a UE.

For example, the path management section 32 can specify, to the path control section 12, VNFs 200 to set up a VNF path, based on a QCI (QoS Class Identifier) associated with a bearer. That is, the path management section 32 can instruct the path control section 12 to change a function of a virtual network node to be associated with a bearer, based on the attribute of the bearer. For example, the path management section 32 can set an operation policy such that a VNF path will include VNFs 200 that are allocated computing resources responding to a QCI. For example, the path management section 32 can set an operation policy such that the higher a QCI is, the more amounts of resources VNFs 200 to set up a VNF path have.

For example, the path management section 32 can also specify, to the path control section 12, VNFs 200 to set up a VNF path, based on any of the UE attributes illustrated in the seventh exemplary embodiments. That is, the path management section 32 can instruct the path control section 12 to change a function of a virtual network node to be associated with a UE, based on the attribute of the UE.

For example, the path management section 32 can also specify, to the path control section 12, VNFs 200 to set up a VNF path, based on the type of a communication service. That is, the path management section 32 can instruct the path control section 12 to change a function of a virtual management node to be associated with a communication service, based on the type of the communication service.

For example, the path management section 32 can instruct the path control section 12 to change a VNF 200 under a heavy load in a VFN path to another VNF 200 having the same type of function, based on the load status of the VNFs 200.

Fig. 32 shows another example of the configuration of the operation and management apparatus 30. The operation and management apparatus 30 includes a data analysis section 33.

The data analysis section 33 collects status related to the server 20 or virtual machines and status related to the network, and analyzes the collected information. The data analysis section 33 can instruct the VNF management section 31 and path management section 32 to change an operation policy as described above, based on the analysis result.

For example, the data analysis section 33 acquires information collected by the status collection section 14 illustrated in the sixth exemplary embodiment. The data analysis section 33 can change an operation policy based on the analysis result.

The data analysis section 33 can change a threshold for determining necessity or unnecessity to perform activation, deactivation, migration, or the like of a virtual machine, based on the analysis result. For example, responding to an increase in control signals (C-Plane Signaling) at a network node, the data analysis section 33 can lower a threshold related to installation of a VNF 200 having a function for processing control signals. Moreover, responding to an increase in control signals, the data analysis section 33 can change an operation policy such that resource amounts for a VNF 200 having a function for processing control signals will be increased.

The data analysis section 33 can change an operation policy related to a VNF path, based on the analysis result. For example, responding to an increase in the load on the communication system, the data analysis section 33 can change an operation policy such that a predetermined VNF (e.g., a VNF that does not affect the continuity of a communication service) in a VNF path will be deleted. Since the resources of the deleted VNF 200 can be supplied to another VNF 200, lowering of performance due to the increase in the load on the communication system can be prevented.

Exemplary embodiments of the present invention have been described hereinabove. However, the present invention is not limited to each of the above-described embodiments. The present invention can be implemented based on a modification of, a substitution of, and/or an adjustment to each exemplary embodiment. Moreover, the present invention can be also implemented by combining any of the exemplary embodiments. That is, the present invention incorporates the entire disclosure of this description, and any types of modifications and adjustments thereof that can be implemented based on technical ideas. Furthermore, the present invention can be also applied to the technical field of SDN (Software-Defined Network).

### [Reference Signs List]

- 1: Terminal
- 2: Base station
- 3: Gateway
- 4: MME
- 10: Control apparatus
- 11: VM control section
- 12: Path control section
- 13: Management DB
- 14: Status collection section
- 15: Interface
- 20: Server
- 200: Virtual network function
- 210: Control section
- 2100: VM control section
- 2101: Path control section
- 2102: Status notification section
- 220: Shared DB
- 230: Packet classification apparatus
- 2300: Storage section
- 2301: Packet processing section
- 2302: Interface
- 30: Operation and management apparatus
- 31: VNF management section
- 32: Path management section
- 33: Data analysis section
- 34: Interface
- 600: Forwarding apparatus
- 610: Storage section
- 620: Packet processing section

## Claims

1. A server **characterized by** comprising:
a first means capable of operating a plurality of network functions executed by a network node on a plurality of virtual machines corresponding respectively to the network functions; and
a second means capable of forwarding a received signal to a virtual machine among the plurality of virtual machines, wherein the virtual machine operates a network function corresponding to the received signal.

2. The server according to claim 1, **characterized in that** the first means is capable of operating the plurality of network functions related to signal processing performed by the network node, on the plurality of virtual machines corresponding respectively to the network functions.

3. The server according to claim 1 or 2, **characterized in that** the first means is capable of operating the plurality of network functions related to signal processing performed by the network node for a communication system to provide services to a user, on the plurality of virtual machines corresponding respectively to the network functions.

4. The server according to any one of claims 1 to 3, **characterized in that** the first means is capable of operating the plurality of network functions on the plurality of virtual machines corresponding respectively to the network functions in such a manner that the virtual machine can be controlled for each of the network functions.

5. The server according to any one of claims 1 to 4, **characterized in that** the second means is capable of forwarding the received signal to a virtual machine included in a path corresponding to a type of the received signal.

6. The server according to any one of claims 1 to 5, **characterized in that** the first means is capable of performing at least one of activation, deletion, deactivation, or migration of the virtual machine for each of the network functions.

7. The server according to any one of claims 1 to 5, **characterized in that** the first means is capable of performing at least one of activation, deletion, deactivation, or migration of the virtual machine for each of the network functions, depending on status of a communication system.

8. The server according to any one of claims 1 to 7, **characterized in that** the first means is capable of changing a path corresponding to a type of the received signal, depending on status of a communication system.

9. The server according to any one of claims 1 to 8, **characterized in that** the second means is capable of forwarding the received signal that belongs to a group to a virtual machine included in a path corresponding to the group of the received signal.

10. The server according to any one of claims 1 to 9, **characterized in that** the second means is capable of identifying a group of the received signal by part of an identifier of the received signal and forwarding the received signal that belongs to the group to a virtual machine included in a path corresponding to the identified group.

11. A control apparatus **characterized by** comprising:
an interface capable of communicating with a server that operates network functions executed by a network node on virtual machines; and
a virtual machine control means capable of instructing the server, via the interface, to operate a plurality of network functions on a plurality of virtual machines corresponding respectively to the network functions.

12. The control apparatus according to claim 11, **characterized in that** the virtual machine control means is capable of instructing the server to operate the plurality of network functions related to signal processing performed by the network node, on the plurality of virtual machines corresponding respectively to the network functions.

13. The control apparatus according to claim 11 or 12, **characterized in that** the virtual machine control means is capable of instructing the server to operate the plurality of network functions related to signal processing performed by the network node to provide services to a user of a communication system, on the plurality of virtual machines corresponding respectively to the network functions.

14. The control apparatus according to any one of claims 11 to 13, **characterized in that** the virtual machine control means is capable of instructing the server to operate the plurality of network functions on the plurality of virtual machines corresponding respectively to the network functions in such a manner that the virtual machine can be controlled for each of the network functions.

15. The control apparatus according to any one of claims 11 to 14, **characterized in that** the virtual machine control means is capable of instructing the server to perform at least one of activation, deletion, deactivation, or migration of the virtual machine for each of the network functions.

16. The control apparatus according to any one of claims 11 to 15, **characterized in that** the virtual machine control means is capable of instructing the server to perform at least one of activation, deletion, deactivation, or migration of the virtual machine for each of the network functions, depending on status of a communication system.

17. The control apparatus according to any one of claims 11 to 16, **characterized by** further comprising a path control means capable of instructing the server to forward a received signal to a virtual machine that operates the network function corresponding to this received signal.

18. The control apparatus according to any one of claims 11 to 16, **characterized by** further comprising a path control means capable of instructing the server to forward a received signal to a virtual machine included in a path corresponding to a type of the received signal.

19. The control apparatus according to claim 17 or 18, **characterized in that** the path control means is capable of instructing the server to change a path corresponding to a type of the received signal, depending on status of a communication system.

20. The control apparatus according to any one of claims 17 to 19, **characterized in that** the path control means is capable of instructing the server to forward the received signal that belongs to a group to a virtual machine included in a path corresponding to the group of the received signal.

21. The control apparatus according to any one of claims 17 to 20, **characterized in that** the path control means is capable of identifying a group of the received signal by part of an identifier of the received signal and forwarding the received signal that belongs to the group to a virtual machine included in a path corresponding to the identified group.

22. A management apparatus **characterized by** comprising:
an interface capable of communicating with a control apparatus that controls a server that operates network functions executed by a network node on virtual machines; and
a virtual machine management means capable of notifying the control apparatus, via the interface, of a policy for operating a plurality of network functions on a plurality of the virtual machines corresponding respectively to the network functions.

23. The management apparatus according to claim 22, **characterized by** further comprising a path management means capable of notifying the control apparatus, via the interface, of a policy for controlling the server to forward a received signal to a virtual machine that operates a network function corresponding to the received signal.

24. The management apparatus according to claim 22 or 23, **characterized by** further comprising a data analysis means for collecting and analyzing status of a communication system,
wherein at least one of the virtual machine management means and the path management means notifies the policy to the control apparatus, based on information analyzed by the data analysis means.

25. A communication system **characterized by** comprising:
a first means capable of operating a plurality of network functions executed by a network node on a plurality of virtual machines corresponding respectively to the network functions; and
a second means capable of forwarding a received signal to a virtual machine that operates a network function corresponding to this received signal.

26. A communication method **characterized by** comprising:
operating a plurality of network functions executed by a network node on a plurality of virtual machines corresponding respectively to the network functions; and
forwarding a received signal to a virtual machine that operates a network function corresponding to this received signal.

27. A control method **characterized by** comprising:
communicating with a server that operates network functions executed by a network node on virtual machines; and
instructing the server, via the interface, to operate a plurality of network functions on a plurality of the virtual machines corresponding respectively to the network functions.

28. A management method **characterized by** comprising:
communicating with a control apparatus that controls a server that operates network functions executed by a network node on virtual machines; and
notifying the control apparatus, via the interface, of a policy for operating a plurality of network functions on a plurality of the virtual machines corresponding respectively to the network functions.

29. A program **characterized by** causing a computer to execute:
processing for communicating with a server that operates network functions executed by a network node on virtual machines; and
processing for instructing the server, via the interface, to operate a plurality of network functions on a plurality of the virtual machines corresponding respectively to the network functions.
